(19)

**Europäisches Patentamt**

**European Patent Office**

**Office européen des brevets**

(11) **EP 4 198 660 B1**

(12) **EUROPEAN PATENT SPECIFICATION**

(45) Date of publication and mention of the grant of the patent:
**16.10.2024 Bulletin 2024/42**

(21) Application number: **21214960.3**

(22) Date of filing: **16.12.2021**

(51) International Patent Classification (IPC):
**G05B 19/4093** (2006.01)   **B23B 1/00** (2006.01)

(52) Cooperative Patent Classification (CPC):
**G05B 19/40937; B23B 1/00;** G05B 2219/36204;
G05B 2219/36263; G05B 2219/36279;
G05B 2219/36342; G05B 2219/49164;
G05B 2219/50336

(54) **A METHOD FOR GENERATING A METAL CUTTING TOOL PATH CYCLE**

VERFAHREN ZUR ERZEUGUNG EINES METALLSCHNEIDWERKZEUGBAHNZYKLUS

PROCÉDÉ DE GÉNÉRATION D'UN CYCLE DE TRAJECTOIRE D'OUTIL DE DÉCOUPE MÉTALLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2023 Bulletin 2023/25**

(73) Proprietor: **AB Sandvik Coromant**
**811 81 Sandviken (SE)**

(72) Inventors:
• **JOHANSSON, Adam**
  **SE-811 81 Sandviken (SE)**
• **LÖF, Ronnie**
  **811 81 Sandviken (SE)**

(74) Representative: **Sandvik**
**Sandvik Intellectual Property AB**
**811 81 Sandviken (SE)**

(56) References cited:
**EP-A1- 3 702 853    US-A- 5 107 414**

EP 4 198 660 B1

## Description

TECHNICAL FIELD OF THE INVENTION

The present invention belongs to the technical field of metal cutting. More specifically the present invention belongs to the field of computer-implemented methods for generating a tool path cycles.

BACKGROUND OF THE INVENTION AND PRIOR ART

The present invention refers to a method according to the preamble of claim 1. In other words, the present invention relates to a computer-implemented method for generating a tool path cycle for machining stock from a blank by means of a turning tool, the turning tool comprising first and second cutting edges connected by a convex nose cutting edge, such that a predefined target shape is formed, the blank being rotatable around a rotational axis represented by a Z-axis, wherein an X-axis is perpendicular to the Z-axis and representing a radial direction, the target shape comprising a plurality of portions, the plurality of portions comprising one or more convex portions and one or more concave portions, at least one radial portion extending to a larger degree along the X-axis than along the Z-axis, at least one longitudinal portion extending to a larger degree along the Z-axis than along the X-axis, wherein one or more of said concave portions of the target shape comprises an arc-shaped portion having a radius of curvature thereof equal to or greater than a radius of curvature of the nose cutting edge, said at least one arc-shaped portion connecting one radial portion and one longitudinal portion, comprising the steps of:

receiving an input of a blank shape,
receiving an input of the target shape
setting of an offset distance,
receiving an input of properties of the turning tool,
setting a first cut direction and a second cut direction, wherein one of said first and second cut directions represents direction of movement of the turning tool along the X-axis and one represents direction of movement of the turning tool along the Z-axis,
generating a first layer completely or partially within the stock, wherein the first layer is bordered by the target shape and a first layer outer border,
wherein the first layer outer border is spaced apart from the target shape by the offset distance,
wherein the first layer outer border comprises one or more convex portions and one or more concave portions.

In metal cutting, turning is a common operation. CNC-lathes are commonly used. Normally, a complex shaped is machined from a metal work piece, also known as a blank. The is clamped and material is removed by means of a turning tool until a target shape is formed.

The material to be removed from the blank is commonly known as stock. In turning, it is common to manually instruct how the metal cutting operation shall be performed. The manual instructions include how, and in which order different passes are performed. A pass is from going into cut to going out of cut. The manual instructions can range from very efficient to less efficient, with regards to parameters such as machining time, tool life, surface finish and other factors. If the person instructing the CNC-tool is very experienced, or if a lot of trial and error experiments are performed, the instructions can result in very efficient machining. However, in some cases there is a need for an automatic or semi-automatic generation of a tool path cycle. For example, ideally, such an automatic or semi-automatic tool path generation method can achieve good performance with regards to e.g., machining time and tool life for a wide range of metal cutting operations, e.g., variations in blank shape and target shape. Such a method is considerably less time consuming than a manual programming.

EP 3 702 853 A1 discloses a method for generating control command data for a turning operation. Although such method give good results, the inventors have found that there is a need for further improvements.

US 5 107 414 A discloses a method for determining a machining method in a numerical control information generating apparatus, by which machining modes can be determined automatically for a shape where recessed shapes overlap.

SUMMARY OF THE INVENTION

One object of the present invention is to provide an improved computer-implemented method for generating a tool path cycle which increases the tool life.

This objective is achieved by the initially defined method, comprising the further steps of

arranging border lines parallel to the Z-axis and/or parallel to the X-axis,
such that each of said border lines extends between the target shape and the first layer outer border and intersects either a concave portion of the first layer outer border or a convex portion of the target shape, thus, dividing the first layer into segments separated by the border lines,
such that adjacent to each longitudinal portion is one longitudinal segment,
such that adjacent to each radial portion is one radial segment,
wherein one border line is arranged such that said border line intersects one of the concave portions of the first layer outer border, thereby separating a radial segment and a longitudinal segment such that said at least one arc-shaped portion borders to only one of said radial and longitudinal segments,
generating a tool path such that each of said segments which border to said at least one arc-shaped portion of a concave portion of the target shape is machined after the segment adjacent to said one segment, such that the turning tool is moved in one direction along the Z-axis when machining the longitudinal segment or segments, and such that the turning tool is moved in one direction along the X-axis when machining the radial segment or segments,

wherein both of said directions along the X-axis and the Z-axis are either both towards or both away from said one or more concave portions of the target shape,

if the first cut direction is along the Z-axis, arranging one border line intersecting the at least one convex portion of the target shape parallel to the Z-axis, and arranging one borderline intersecting the at least one concave portion of the

first layer outer border parallel to the X-axis,

if the first cut direction is along the X-axis, arranging one border line intersecting the at least one convex portion of the target shape parallel to the X-axis, and arranging one borderline intersecting the at least one concave portion of the first layer outer border parallel to the Z-axis,

if the first cut direction is along the Z-axis, machining the longitudinal segment or segments, followed by machining the radial segment or segments,

if the first cut direction is along the X-axis, machining the radial segment or segments, followed by machining the longitudinal segment or segments.

By such a method, the risk of insert breakage can be reduced because the inventors have found that when machining a concave portion without any prior removal of material adjacent to said concave portion, there is an increased risk of insert breakage. The increased risk may according to the inventors be due to excess cutting depth and/or increased risk of chip hammering. Especially, when turning towards an internal shoulder or a concave portion without prior removal of material adjacent to said internal shoulder or concave portion, the inventors have found that there is an increased risk of insert breakage. This problem has been found to be reduced by a method where one or more layers, substantially following the shape of a target shape, are divided into segments such that borders separating adjacent segments are spaced apart from mid-points of concave portions.

By such a method, a tool path can be generated based on a limited number of input data for turning components of a high variety of shapes, where machining can be performed efficiently with regards to e.g., tool life and/or cycle time and/or surface finish.

The computer-implemented method is for generating a tool path cycle or a cutting cycle, such as for generating instructions for controlling a CNC-lathe. The tool path is for controlling movements of a turning tool in relation to a work piece or a blank, such as feed directions and order of passes. The turning tool is suitable to remove stock from a blank. The turning tool comprises first and second cutting edges connected by a convex surface generating nose cutting edge. The nose cutting edge is preferably arc-shaped in a top view, having a radius of curvature of e.g., 0.1 - 1.6 mm. The first and second cutting edges are at least partly linear in a top view and preferably form an acute angle in a top view, preferably 15 - 85°, even more preferably 25 - 83°.

In case the first cut direction is set to be parallel to the X-axis, the nose angle is preferably 50° or less, or if the shape of the first and second cutting edges in a top view are not straight, an angle between an active part of the first or second cutting edge in relation to the bisector is 25° or less. This is to reduce the risk of chip jamming when machining concave portions.

A bisector between the first and second cutting edges preferably forms an angle of 40° - 50°, even more preferably 45° degrees relative to the Z-axis.

The tool path cycle is to form through metal cutting a predefined target shape. The blank extends longitudinally, i.e., axially, along a Z-axis and extends radially along an X-axis. The Z-axis represents a rotational axis, around which the blank is rotatable. The X-axis is perpendicular to the Z-axis. The blank or blank shape is represented in the X-Z plane by a continuous line, extending between first and second blank end points.

The target shape is represented in the X-Z plane by a continuous line, extending between first and second target end points, comprising a set of portions, i.e., a set of sub-parts, which are connected and jointly form the target shape. A portion may be linear or curved. A linear portion extends between two ends. The end may either be an end point of the target shape, or where the target shape deviates from the linearity of the linear portion. An arc-shaped portion have a radius of curvature thereof and extends between either an end point or where the target shape deviates from the said curvature, such as a linear portion or a portion having a different radius of curvature.

A normal of a point of said arc-shaped portion forms an angle of 45° in relation to the Z-axis. Said point is a mid-point of said arc-shaped portion if the arc-shaped portion connects one longitudinal portion parallel to the Z-axis and one radial portion parallel to the X-axis. The set of portions comprising one or more convex portions, or corners, points, or sections, and one or more concave portions. The target shape may comprise at least two, at least three, at least four or at least five convex and/or concave portions.

The set of portions further comprises at least one radial portion extending to a larger degree along the X-axis than along the Z-axis. A radial portion is inclined by an angle more than 45° in relation to the Z-axis. Said radial portion may e.g., be linear and parallel to the X-axis. For all points of the radial portion, a normal forms an angle smaller than 45° in relation to the Z-axis. The set of portions further comprises at least one longitudinal portion extending to a larger degree along the Z-axis than along the X-axis. Said longitudinal portion my e.g., be linear and parallel to the Z-axis. A longitudinal portion is inclined by an angle less than 45° in relation to the Z-axis. For all points of the longitudinal portion, a normal thereof forms an angle greater than 45° in relation to the Z-axis.

For a radial portion, the distance between end points of said portions is greater along the X-axis than along the Z-axis, while the opposite is true for a longitudinal portion. Said end points are part of the target shape.

The target shape does not comprise any concave portion having a radius of curvature smaller than the radius of curvature of the nose cutting edge. At least one of the concave portions is in the form of an arc-shaped portion having a radius of curvature thereof equal to or greater than a radius of curvature of the nose cutting edge. Said arc is preferably a circular arc.

The target shape is such that each point of the target shape in the X-Z plane is in line of sight from at least one point in the X-Z plane. In other words, each point of the target shape in the X-Z plane is facing one point in the X-Z plane.

The method comprises the steps of receiving an input of a blank or start shape, receiving an input of the target shape, setting an input of an offset distance, or offset distance function and setting a first cut direction and a second cut direction. The stock or material to be removed is defined as the difference between the blank shape and the target shape. Said inputs may be in the form of user input. Alternatively, the input received for the blank shape may be in the form of measuring data from a measuring device. The input received for the target shape may be in the form of data from a database of one or more drawings. The offset distance or offset distance function may e.g., set manually from a user input, from a preset value or function from a computer program, or from a database containing cutting data recommendations. The offset distance may be set from of a plurality of parameters, from which the offset distance is calculated. Said first and second cut directions are along the X- and Z-axis, and may be selected through a user input, or may be selected based on parameters such as the turning tool properties and/or the target shape.

The method may comprise the step of receiving input of a turning tool, e.g., through receiving a user input of a turning tool, such that the properties of the turning tool is selected to be suitable for turning of the blank to form the selected target shape. The turning tool may be selected from a tool data base, may be selected by a user, or may be set based on parameters such as the target shape, first cut direction and second cut direction.

The blank shape and target shape are symmetrical in relation to a Z-axis representing a rotational axis of the blank. Said shapes are in the form of representations in the X-Z plane.

The method comprises the step of generating or arranging a first layer or first layer shape, completely or partially within the stock. The first layer is bordered by the target shape, defining a first layer inner border, and a first layer outer border, perpendicularly spaced apart from the target shape by an offset distance or offset distance function. The first layer extends continuously between the first and second target end points. The offset distance is the perpendicular distance from the target shape to the first layer outer border. Said offset distance may be constant, i.e., a specific value, or a range, or a function. The first layer outer border is a cautious line in the X-Z plane. The shape of the first layer outer border substantially corresponds to the shape of the target shape. This means that all or substantially all portions first layer outer border corresponds to a portion of the target shape. For example, the number of convex and concave portions are equal for the target shape and the first layer outer border. The shortest distance from each point of the first layer outer border to the target shape may be constant, or may vary, but is preferably less than or equal to a predefined value.

The first layer is divided into segments, which together form the first layer. The first layer is not machined in a single turning pass, and the segmenting of the first layer is for assisting a setting of the order and direction of machining the first layer, i.e., the stock which is inside the first layer. The segments are separated or divided by a set of imaginary border lines. Each of said border lines are arranged either parallel to the Z-axis or parallel to the X-axis. All border lines may be parallel to the X-axis. Alternatively, all border lines are parallel to the Z-axis. Alternatively, at least one borderline is parallel to the X-axis, and at least one borderline is parallel to the Z-axis. Said border lines extends between the target shape and the first layer outer border.

One longitudinal segment is adjacent to the longitudinal portion. If the target shape comprises more than one longitudinal portion, the target shape may comprise more than one longitudinal segment, at least if the longitudinal length, i.e., extension along the Z-axis, of the longitudinal portions are sufficiently great.

One radial segment is adjacent to the radial portion. If the target shape comprises more than one radial portion, the target shape may comprise more than one radial segment, at least if the radial length, i.e., extension along the X-axis, of the radial portions are sufficiently great.

The segmentation is such that the whole arc-shaped portion is within exactly one segment.

The method comprises the step of instructing the turning tool to remove all segments, more specifically the stock or material inside all segments, through several passes, which number is equal to the number of segments. Removing a segment thus means removing the part of the stock within said segment.

The removal is set to be achieved by means of the nose cutting edge and the first cutting edge and/or the second cutting edge.

The number of passes is equal to the number of radial and longitudinal segments.

The nose cutting edge generates the machined surface. In other words, the nose cutting edge moves along the target shape.

The cutting depth may vary when removing the stock within the first layer. At least for one pass, i.e., when removing stock within one segment, the first cutting edge is active, and at least for one other pass, the second cutting edge is active, i.e., in cut.

All segments of the first layer are thus removed, i.e., all stock within the first layer is removed, and the target shape is formed.

A concave or convex portion of the target shape or the first layer outer border can e.g., be in the form of one circular arc, or one sharp corner.

One radial set of segments is adjacent to the radial portions. In other words, each radial segment is adjacent to a radial portion. There may be only one radial segment, adjacent to a single radial portion. One border line is arranged such that said border line intersects the concave portion of the first layer outer border. Preferably, each concave portion of the first layer outer border is intersected by a border line, wherein said border lines are parallel.

A radial segment and a longitudinal segment, which each comprises portions adjacent to the concave portion, are separated by said one border line such that the arc-shaped portion borders to one of said radial and longitudinal segments. If said one border line is parallel to the X-axis, the radial segment comprises said arc-shaped portion. If said one border line is parallel to the Z-axis, the longitudinal segment comprises said arc-shaped portion. The order of removal of all segments by means of the turning tool is such that said one segment which borders to the arc-shaped portion is removed after the segment adjacent to said one segment. In other words, if said one border line is parallel to the Z-axis, the radial segment is removed prior to the longitudinal segment. If said one border line is parallel to the X-axis, the longitudinal segment is removed prior to the radial segment.

The removal of segments is such that the turning tool is moved in one direction along the Z-axis when removing the longitudinal segment or the longitudinal segment or segments, i.e., one of the first and second cutting edges is active. The turning tool is moved in one direction along the X-axis when removing the radial segment or segments, i.e., one of the first and second cutting edges is active. Both of said directions along the X-axis and the Z-axis are either both towards the concave portion or both away from the concave portion. This results in that if the first cutting edge is active when removing said longitudinal segment, the second cutting edge is active when removing said radial segment, or vice versa. This results in insert wear more evenly distributed along the cutting edge.

Additionally, with such a method, the user can select the cutting direction both longitudinally and radially. This is an advantage because the method can be used for a variety of turning tools. Some turning tools are suitable for machining in only one radial and one longitudinal direction, while other turning tools can be used in opposite longitudinal and radial directions. Dependent on the turning tool, for maximum tool life the cutting direction may differ.

By such a method, the surface finish can be kept at an acceptable level, because the target shape is generated through relatively few passer, thus reducing the number of cusps.

The arrangement of said border lines is dependent on the selected first cut direction. If the first cut direction set to be is along the Z-axis, a border line parallel to the Z-axis is arranged such that said border line intersects the convex portion of the target shape. If the target shape comprises more than one convex portion, every one convex portion is intersected by one border line parallel to the Z-axis. The number of border lines are thus equal to the number of convex portions. Further, if the first cut direction set to be is along the Z-axis, one borderline parallel to the X-axis is arranged such that it intersects the concave portion of the first layer outer border, and such that it intersects one longitudinal portion of the target shape. If the first layer outer border comprises more than one concave portion, everyone of said concave portions is intersected by one border line parallel to the X-axis.

If the first cut direction is along the X-axis, one border line is arranged such that said border line intersects the convex portion of the target shape, where said border line is parallel to the X-axis. Further, one borderline is arranged such that said border line intersects the concave portion of the first layer outer border, and intersects a radial portion, where said border line is parallel to the Z-axis. If the first layer outer border comprises more than one concave portion, each of said portions is intersected by a border line parallel to the Z-axis.

If the first cut direction is along the Z-axis, the longitudinal segment or segment or segments is removed first, by moving the turning tool along the Z-axis. The moving along the Z-axis is to be understood as one component of the direction of movement is along the Z-axis, in the direction along the Z-axis as set by the first cut direction. After all longitudinal segments have been removed, all radial segments are removed, by moving the turning tool along the X-axis, such that one component of the direction of movement is in the second cut direction.

If the first cut direction is along the X-axis, the radial segments are all removed prior to the longitudinal segments. The direction of movement of the turning tool is as above, i.e., along the X-axis in for the radial segments, and along the Z-axis for the longitudinal segments.

Regardless of whether the first cut direction is along the X-axis or along the Z-axis, the first segment to be removed is preferably the segment adjacent to the first target end point or the second target end point.

Both the first cut direction and the second cut direction are either both towards the concave portion or both away from the concave portion.

According to an embodiment, if the first cut direction is along the Z-axis, removing the longitudinal segment or segments by moving the turning tool in one direction along the Z-axis, followed by removing the radial segment or segments by moving the turning tool in one direction along the X-axis, if the first cut direction is along the X-axis, removing the radial segment or segments by moving the turning tool in one direction along the X-axis, followed by removing the longitudinal segment or segments by moving the turning tool in one direction along the Z-axis.

By such a method, the machining time can be kept relatively low because the turning tool is moved in one direction only along the X-axis and Z-axis, respectively, for each set of segments. Each set of segments here refers to a radial set of segments, i.e., one or more radial segments, and a longitudinal set of segments, i.e., one or more longitudinal segments. Thus, the time for air movements or rapid traverse of the turning tool, i.e., movements of the turning tool between passes, can be kept relatively low.

According to the invention, both the first cut direction and the second cut direction are either both towards the concave portion or both away from the concave portion.

By such a method, the wear is spread out over a longer part of the cutting edge. More precisely, both the first and second cutting edge are subject to wear. Thus, the tool life can be increased.

The radial segment or segments are removed by means of the nose cutting edge and the first cutting edge, and the longitudinal segment or segments are removed by means of the nose cutting edge and the second cutting edge. Alternatively, the longitudinal segment or segments are removed by means of the nose cutting edge and the first cutting edge, and the radial segment or segments are removed by means of the nose cutting edge and the second cutting edge.

Preferably, both the first cut direction and the second cut direction are both in a direction away from the concave portion. By such a method, the wear of the nose cutting edge can be further reduced, thereby increasing the tool life.

According to an embodiment, the radial portion is parallel to the X-axis and the longitudinal portion is parallel to the Z-axis, wherein one of the radial and the longitudinal portions is formed by a single pass.

A radial portion of the target shape is parallel to the X-axis and the longitudinal portion of the target shape is parallel to the Z-axis, thus forming an inner 90° corner.

One of the first and the longitudinal portions which are adjacent to the concave portion in the form of an arc-shaped portion is formed by a single pass. If the first cut direction is parallel to the X-axis, the longitudinal portion is formed by a single pass. If the first cut direction is parallel to the Z-axis, the radial portion is formed by a single pass.

By such a method, the surface finish is improved. The whole of either of said first and longitudinal portions of the target shape is formed by a single pass. Each of said first and longitudinal portions extends parallel to either the X- or Z-axis, until the target shape deviates from being parallel to one of said axis or until the target shape ends.

According to an embodiment, the target shape comprises a further longitudinal portion, wherein the further longitudinal portion and the radial portion are connected by the convex portion of the target shape in the form of an arc-shaped portion, wherein a third segment is bordered by the further longitudinal portion.

The third segment is bordered by or adjacent to the further longitudinal portion. The turning tool is moved in the same direction along the Z-axis when removing the longitudinal segments, wherein said longitudinal segments are removed in sequence, one immediately prior to another. The radial segment is removed after or prior to both of said longitudinal segments.

The further longitudinal portion may e.g., be parallel to the longitudinal portion and at a different, e.g., greater, distance from the Z-axis.

By such a method, the cycle time is reduced because the turning tool movement along the Z-axis is minimized between removal of the first and second segments.

According to an embodiment, the method comprises the further steps of receiving input of one parameter or two parameters representing an offset distance in the X-direction and an offset distance in the Z-direction.

The input may e.g., be in the form of a user input, or input from a digital tool data base where said parameter or parameters for the turning tool is stored. Said offset distances may be set as a function of both turning tool and cut direction. For example, an offset distance may for a specific turning tool may have different values depending on which direction along the Z-axis the first cut direction is directed.

The parameters for setting the offset distance comprises an offset x value, i.e., an offset distance in along the X-axis, and an offset z value, i.e., an offset distance along the Z-axis.

One parameter, i.e., one value, may represent the offset distance in both the X- and Z-direction. In other words, said offset distances are equal. Alternatively, said offset distances are not equal, and therefore two different values are set. Said values are preferably within the range of 0.2 - 8.0 mm, even more preferably 0.5 - 5.0 mm.

By such a method, the cutting depth can be selected such that it is suitable for turning tools which are not symmetrical, for example for inserts which does not have a bisector between the first and second cutting edges which form an angle of 45° in relation to the Z-axis, or which is not is equally suitable for turning radially and longitudinally.

According to an embodiment, the convex portion connects the radial portion, parallel to the X-axis, and a further longitudinal portion, parallel to the Z-axis, wherein a radial portion of the first layer outer border is parallel to the radial portion and spaced apart by the offset distance in the Z-direction, wherein a longitudinal portion of the first layer outer border is parallel to the further longitudinal portion and spaced apart by the offset distance in the X-direction, wherein the radial and longitudinal portions of the first layer outer border intersect in a convex portion of the first layer outer border, said convex portion being in the form of a 90° corner.

The method preferably comprises the above steps only when or if the radius of curvature of the convex portion of the target shape is below a predefined value. Said predefined value is preferably within the range of 0.4 - 3.0 mm.

The method may preferably comprise the step of setting a predefined maximum cutting depth value, where said value may be set manually i.e., input by a user, or automatically from a database which comprises a maximum cutting depth value for the cutting tool. one border line. A perpendicular distance from the one border line intersecting the convex portion of the target shape to the first layer outer border is set to be less than or equal to said maximum cutting depth value.

The first layer outer border comprises a radial portion, where said radial portion is parallel to the X-axis. Said radial portion of the first layer outer border is parallel to a portion of the radial portion of the target shape and spaced apart by the offset distance in the Z-direction.

The convex portion of the first layer outer border is in the form of a sharp 90° corner, i.e., a corner without curvature. Said corner connects portions of the first layer outer border which portions are parallel to the X-axis and parallel to the Z-axis, respectively.

According to an embodiment, the method comprises the further steps of setting a split angle and arranging the border lines intersecting the convex portions from points of said convex portions having a normal thereof which form an angle relative to the Z-axis equal to the split angle.

The method thus comprising the step of setting, e.g., through receiving an input from a user, a split angle, which is a split angle. Said angle can alternatively be set to a default value, preferably 45°. Alternatively, said angle may be calculated from parameters. By such a method, segmentation around or in the vicinity of concave portions can be selected in a controlled manner.

The split angle is preferably set to 45°. In such a case, and if the first cut direction 25 is along the Z-axis, the longitudinal portions forms at each point an angle relative to the Z-axis which is 45° or less. In such a case, and if the first cut direction 25 is along the X-axis, the radial portions forms at each point an angle relative to the Z-axis which is 45° or more.

According to an embodiment, the method comprises the further step of setting the split angle to be equal to arctan (*Ox* / *Oz*).

Said split angle is thus set to be equal to arctan of the offset distance in the X-direction divided by the offset distance in the Z-direction.

By such a method, each segment adjacent to a concave portion will have a more uniform thickness, resulting in reduced risk of a cutting depth above the offset distance.

According to an embodiment, the method comprises the further steps of from said parameters representing the offset distances in the X- and Z-directions *Ox, Oz* calculating the offset distance,

and arranging the first layer outer border perpendicularly spaced apart from the target shape by the offset distance,
wherein the offset distance m is calculated according to the formula

$$m = ((90-\beta) \cdot Ox + \beta \cdot Oz)/90$$

where the angle $\beta$ is the angle which the target shape forms relative to the Z-axis.

Said angle is in degrees. Said angle is the angle which each point of the target shape forms relative to the Z-axis.

By such a method, the distance to the first layer outer border can be calculated with respect to a turning tool having different properties for radial and longitudinal turning also for target shapes with more complex shapes, such as target shapes comprising tapered portions.

According to an embodiment, the method comprises the further steps of generating perpendicular supporting lines from points of each concave portions of the target shape which form a normal thereof at an angle relative to the Z-axis equal to the split angle, arranging the border line or lines which intersect convex portions of the target shape such that said border lines intersect said points, and arranging the border line or lines which intersect concave portions of the first layer outer border such that each of said border lines intersect an intersection of one supporting line and the first layer outer border.

The split angle is preferably equal to arctan (*Ox / Oz*).

According to an embodiment, the method comprises the further steps of immediately after or substantially immediately after removing all stock within each segment at a feed rate, moving the turning tool to the subsequent segment at a faster speed than said feed rate.

Removal of segments is achieved by the nose cutting edge of the turning tool moves along the inner border line of said segment, i.e., along the target shape for the first layer. The movement is through what is called feed, normally set to a specific distance per revolution of the work piece, normally in the range of 0.05 - 8.0 mm per revolution. Immediately after or substantially immediately after removal of each segment, the turning tool is moved in a direction away from the inner border line of said segment, at a faster speed than the feed rate towards the start position of subsequent segment. Such fast movement is also known as air movement or rapid traverse.

Such removal of the turning tool is preferably immediately after or substantially immediately after all stock within said segment has been removed, for layers of second or higher order. Immediately after should be understood as a time less than three seconds after all stock within said segment has been removed, preferably less than two seconds.

By such a method, the cycle time is reduced.

According to an embodiment, the method comprises the further steps of arranging the turning tool such that the first cutting edge forms a constant angle relative to the Z-axis when removing all segments, wherein the turning tool comprises a tool body and a turning insert, wherein the tool body extends along a longitudinal axis thereof, extending between a front end and a rear end, wherein the rear end is connected to a machine interface of a CNC-lathe, wherein the turning insert is connected to the front end of the tool body, wherein the longitudinal axis is arranged parallel to the X-axis.

The turning tool is preferably selected such that a bisector extending mid-way between the first and second cutting edges form an angle of 45° in relation to the Z-axis.

According to an embodiment, the method comprises the further steps of setting the turning tool prior to setting the first and second cut directions, and if a nose angle of the turning tool is above 60° and each of the first and second cutting edges has a length thereof in a top view which exceeds the offset distance, setting the first and second cut directions towards the concave portion or portions.

By such a method, the risk for insert breakage is further reduced. The inventors have found that turning towards a concave portion, especially towards a concave 90° corner, there is an increased risk of insert breakage for turning inserts having a relatively large nose angle, such as insert of the type CNMG which have an 80° nose angle.

In a top view, each of the first and second cutting edges has a length thereof which exceeds the offset distance, or alternatively a length thereof which exceeds 5 mm, even more preferably a length which exceeds 7 mm.

The nose angle is defined as the angle between the first and second cutting edges in a top view. The turning tool preferably comprises a turning insert.

According to an embodiment, the method comprises the further steps of setting the first and second cut directions prior to setting the turning tool, and if one or both of the first and second cut directions has been set to be in a direction away from the concave portion or portions, setting the turning tool such that either a nose angle of the turning tool forms an angle less than or equal to above 60° or such that the turning tool comprises third and fourth cutting edges, forming an angle therebetween of 60° or less, where said third and fourth cutting edges are spaced apart from the nose cutting edge by a distance less than the offset distance.

The inventors have found that when turning in a direction away from the concave portion, there is an increased risk of insert breakage for turning inserts having a relatively large nose angle, such as insert of the type CNMG which have an 80° nose angle, and that this risk is reduced by any of the above described turning tools.

The nose angle is defined as the angle between the first and second cutting edges in a top view. The turning tool preferably comprises a turning insert. The second mentioned turning tool may preferably comprise a turning insert comprising a nose cutting edge connecting first and second cutting edges, where the first and second cutting edges form a nose angle of 70 - 85°, where the first cutting edge is between the nose cutting edge and the third cutting edge, where the second cutting edge is between the nose cutting and the fourth cutting edge, where the third and fourth cutting edges forms an angle of less than 50°. A portion of the third and a portion of the fourth cutting edges are spaced apart from the nose cutting edge by a distance less than the offset distance, alternatively by a distance less than 6 mm, preferably less than 5 mm.

According to an embodiment, the method comprises the further steps of if the blank shape is at least partly outside the first layer outer border, generating one or more further layers further away from the target shape, until all layers generated is completely spaced apart from the stock, wherein each further layer is limited by an inner border and an outer border, wherein for each further layer, the respective outer border is spaced apart from the respective inner border by the offset distance, dividing each further layer into a set of segments separated by border lines, wherein each of said set of segments corresponds to the set of segments of the first layer, wherein each of said border lines corresponds to a border line of the first layer, and instructing the turning tool to remove all segments which comprises stock from the layer of highest order, followed by all segments which comprises stock from each subsequent layer, until the first layer remains.

Shapes of said outer borders of said further layer or layers corresponds to or substantially corresponds to the shape of the first layer outer border. Said outer borders of said further layer or layers comprises an equal number of convex and concave portions as the first layer outer border.

Each of said further layers is at least partially within the stock.

An outer border of a layer of lower order is the same as, i.e., corresponds to, or coincides with an inner border of a layer of one higher order. An outer border of a layer of higher order spaced apart from an outer border of a layer of lower order.

The border lines of the further layer or layers are drawn or generated in a corresponding manner as the border lines of the first layer. Thus, if the first cut direction is along the Z-axis, border line or lines intersecting convex portion or portions of the inner border of the respective layer are arranged parallel to the Z-axis, and border line or lines intersecting concave portion or portions of the outer border of the respective layer are arranged parallel to the X-axis. Alternatively, if the first cut direction is along the X-axis, border line or lines intersecting the convex portion or portions of inner border of the respective layer are arranged parallel to the X-axis, and border line or lines intersecting the concave portion or portions of the outer border of the respective layer are arranged parallel to the Z-axis.

The order of removal of the segments which comprises stock for each further layer corresponds to or substantially corresponds to the order of removal of the corresponding segments of the first layer.

The removal of said segments of each further layer is in corresponding manner as for corresponding segments of the first layer with respect to direction of movement of the turning tool.

The segments which comprises stock are removed in order of layer, i.e., all segments of the outside layer machined first, followed by all segments of the second outside layer, and so forth.

Each segment which comprises stock is removed by a turning tool in one pass. The number of passes is equal to the number of segments which comprises stock.

At least for some points of the target shape, a perpendicular distance from the target shape to the outer border of the second, third etc. layer is a multiple of a perpendicular distance from the target shape to the outer border of the first layer. In other words, the layers have at least partly an even thickness, where a thickness of a layer is defined as a perpendicular distance between the inner and outer borders of the respective layer.

The offset distance or offset distance function is the same, i.e., calculated or set in a corresponding manner, for all layers.

According to an embodiment, there is provided a computer program product having instructions which when executed by a computing device or system cause the computing device or system to perform the method according to any one of the above described methods.

DESCRIPTION OF THE DRAWINGS

The present invention will now be explained in more detail by a description of embodiments of the invention and by reference to the accompanying drawings.

Fig. 1    is a schematic illustration showing how a first layer is arranged partly within the stock, adjacent to a target shape.

Fig. 2    is a schematic illustration showing an alternative first layer arranged adjacent to the target shape in Fig. 1

Fig. 3    is a schematic illustration showing how the first layer in Fig. 1 is divided into segments.

Fig. 4    is a schematic illustration showing an alternative segmentation of the first layer in Fig. 1.

Fig. 5    is a schematic illustration showing how the first layer in Fig. 2 is divided into segments.

Fig. 6    is a schematic illustration showing an alternative segmentation of the first layer in Fig. 2.

Figs. 7-12    are schematic illustrations of steps where the segments in Fig. 5 are removed by means of a turning tool.

Figs. 13-18    are schematic illustrations of an alternative order of steps to remove the segments in Fig. 5.

Figs. 19-24    are schematic illustrations of steps where the segments in Fig. 6 are removed by means of a turning tool.

Figs. 25-30    are schematic illustrations of an alternative order of steps to remove the segments in Fig. 6.

Fig. 31    is a schematic illustration showing how a first layer is arranged within the stock, adjacent to an alternative target shape.

Fig. 32    is a schematic illustration showing the target shape in Fig. 31 where a second layer is added.

Fig. 33    is a schematic illustration showing the target shape in Fig. 31 where first, second and third layers are segmented.

Fig. 34    is a schematic illustration showing an alternative segmentation of the layers in Fig. 33.

Fig. 35    is a schematic illustration showing how an alternative first layer is arranged adjacent to the target shape in Fig. 31.

Fig. 36    is a schematic illustration showing how a second layer is added to Fig. 35.

Fig. 37    is a schematic illustration showing a third layer added to Fig. 36, where first, second and third layers are segmented.

Fig. 38    is a schematic illustration showing an alternative segmentation of the layers in Fig. 37.

Fig. 39    is a schematic illustration showing how a segmented first layer is arranged partly within the stock, adjacent to a further alternative target shape.

Fig. 40    is a schematic illustration showing an alternative segmentation of the first layer in Fig. 39.

Fig. 41    is a schematic illustration showing the target shape of Fig. 1 and an alternative blank shape, where first and second layers are segmented.

Fig. 42 is a schematic illustration showing an alternative segmentation of the layers in Fig. 41.

DETAILED DESCRIPTION OF EMBODIMENTS OF THE INVENTION

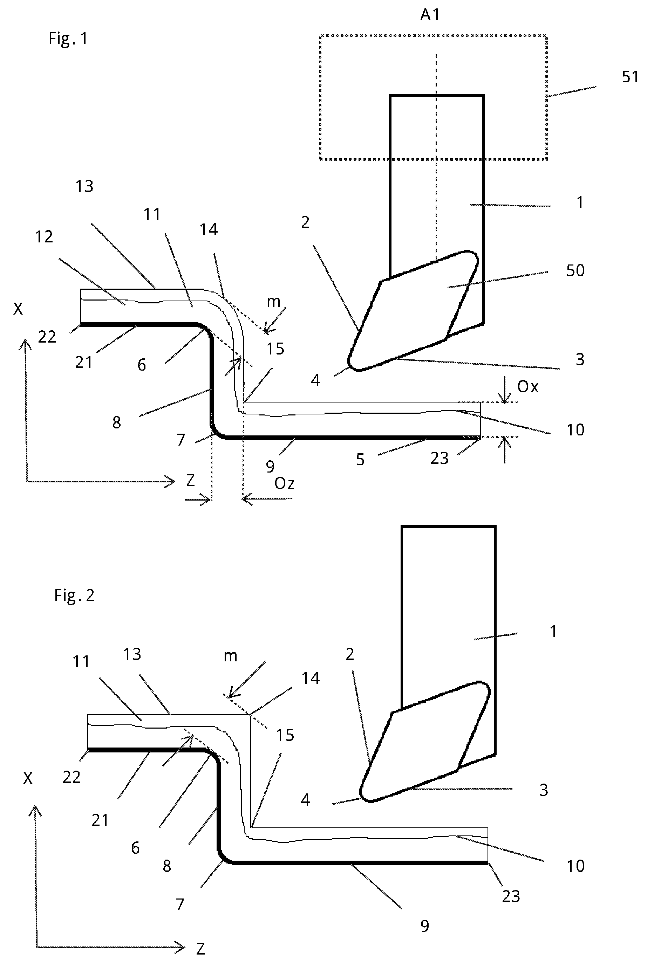

Reference is made to Figs. 1 showing a turning tool 1 and parts of a blank having a blank shape 10. The turning tool 1 is connected to a machine interface 51 which is part of a CNC-lathe (not shown). A numerical control apparatus (not shown) instruct movements of the turning tool 1 and rotation of the blank around a rotational axis thereof, thereby forming a target shape 5 through removal of stock 12. The blank shape 10, i.e., the outer border of the blank, and the target shape 5 are shown in the X-Z plane, where the rotational axis of the blank is represented by the Z-axis and the X-axis represents a radial direction of the blank, where the X-axis is perpendicular to the Z-axis. The target shape 5 extends continuously between first and second target end points 22, 23, and is formed by a plurality of portions 6, 7, 8, 9, 21. The target shape 5 comprises two longitudinal portions 9, 21 parallel to the Z-axis, one radial portion 8 parallel to the X-axis, one arc-shaped convex portion 6 and one arc-shape concave portion 7. Said arc-shapes 6, 7 are circular arc-shapes 6, 7. The turning tool 1 comprises a tool body and a turning insert 50. The turning insert is mounted in an insert seat formed in the tool body by clamping means (not shown). The tool body extends along a longitudinal axis A1 thereof, extending between a front end and a rear end. The insert seat is formed at the front end, and the rear end is connected to the machine interface 51. The longitudinal axis A1 is parallel to the X-axis. The turning insert 50 is shown in top view and comprises first and second cutting edges 2, 3 connected by a convex nose cutting edge 4 having an arc shape which is a surface generating cutting edge. A nose angle is defined as the angle between the first and second cutting edges 2, 3, and said nose angle is acute. The arc-shaped nose cutting edge 4 has a smaller radius of curvature than the arc-shaped concave portion 7. Fig. 1 show one example of how a virtual first layer 11 is generated, extending between the target shape 5 and a first layer outer border 13. The first layer 11 is partially within the stock 12. The area of the stock 12 in the X-Z plane is smaller than the corresponding area for the first layer 11. The stock 12 does not extend outside the first layer 11. The first layer outer border 13 is spaced apart from the target shape 5 by an offset distance m. The offset distance m is equal to or less than a maximum cutting depth for the turning insert 50. The offset distance m is a constant value, which means that a perpendicular distance from the target shape 5 to the first layer outer border 13 is a constant value. This means that an offset distance in the X-direction $Ox$ is equal to an offset distance in the Z-direction $Oz$ which is equal to the offset distance m. The thickness of the first layer 11 is thus uniform, where the thickness is measured perpendicularly from the target shape 5. The first layer outer border 13 comprises one convex portion 14 corresponding to the convex portion 6 of the target shape 5, and one concave portion 15 in the form of a sharp inner corner corresponding to the concave portion 7 of the target shape 5. The first layer outer border 13 further comprises longitudinal portions parallel to and corresponding to the two longitudinal portions 9, 21 of the target shape 5, and one radial portion corresponding to and parallel to the radial portion 8 of the target shape.

The shape and orientation of the turning tool 1 is such that the stock 12 can be removed such that the target shape 5 is formed. The target shape 5 is such that each point of the target shape 5 in is in line of sight from at least one point in the X-Z plane, for example a point within the area representing the machine interface 51. In other words, each point of the target shape in the X-Z plane is facing one point in the X-Z plane.

Fig. 2 differs from Fig. 1 in that the shape of the first layer outer border 13 is different and in that the offset distance m is not constant. More specifically, the convex portion 14 of the first layer outer border 13 is in the form of a sharp 90° corner 14. Said 90° corner 14 is formed by extending the longitudinal and radial portions of the first layer outer border 13 which correspond to the longitudinal portion 21 and the radial portion 8, respectively, of the target shape 5. Said longitudinal portion 21 and radial portion 8 of the target shape 5 are separated by the convex portion 6 of the target shape 5. Said extending of portions is in a linear manner. The offset distance m has a constant value except for at the convex portion 6 of the target shape 5 where the offset distance m is higher, i.e., the offset distance increases at the convex portion 6 of the target shape 5.

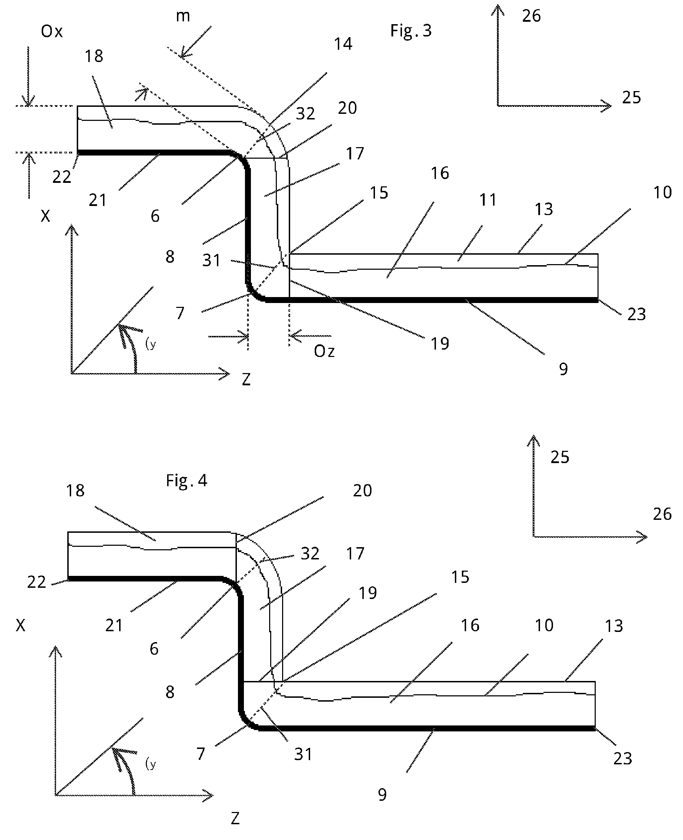

Fig. 3 show one alternative of segmenting the first layer 11 in Fig. 1. More specifically, Fig. 3 shows segmenting when the first cut direction 25 is set to be along the Z-axis. The first layer 11 is divided into segments which are longitudinal 16, 18 and radial 17. A first cut direction 25 is set which in Fig. 3 is parallel to the Z-axis, towards the right-hand side, and a second cut direction 26 is set to be parallel to the X-axis, in the direction upwards. The first cut direction 25 decides if the longitudinal segments 16, 18 is to be removed prior to or after the radial segment 17. In Fig. 3, where the first cut direction 25 set to be along the Z-axis, the longitudinal segments 16, 18 are removed first.

Since the offset distance in the X-direction $Ox$ is equal to the offset distance in the Z-direction $Oz$, a split angle $\alpha$ is set to 45°.

One supporting line 31 forms an angle in relation to the Z-axis which is equal to the split angle $\alpha$. Said supporting line 31 extends perpendicularly from the point of the concave portion 7 of the target shape 5 which form a 45° normal thereof, i.e., equal to the split angle α in relation to the Z-axis.

One other second supporting line 32 is parallel to the first mentioned supporting line 31 and extends perpendicularly from the point of the convex portion 8 of the target shape 5 which form a 45° normal thereof in relation to the Z-axis.

The segmentation is such that one borderline 19 parallel to the X-axis is arranged such that said borderline 19 intersects the concave portion 15 of the first layer outer border 13 and intersects one longitudinal portion 9 of the target shape 5. Said borderline 19 is spaced apart from a mid-point of the concave portion 7. Said borderline 19 intersects the point where the supporting line 31 intersects the first layer outer border 13. The borderline 19 which intersects the concave portion 15 of the first layer outer border 13 is set to be parallel to the X-axis because the first cut direction is along the Z-axis.

A second borderline 20 extends between the target shape 5 and the first layer outer border 13 and extends parallel to the Z-axis. Said borderline 20 extends from the target shape 5 from the same point as the second supporting line 32. The second borderline 20 extends parallel to the Z-axis because the first cut direction is along the Z-axis.

The first layer 11 is thus by the borderlines 19, 20 divided into three segments 16, 17, 18, where two segments 16, 18 are longitudinal segment and one segment 17 is a radial segment. Every second segment from the first 22 to the second target end point 23 is a longitudinal segment 16, 18. The segmentation would be the same even if the first cut direction 25 would be towards the left hand side, and if the second cut direction 26 would be downwards in the figure.

Fig. 4 shows segmentation of the first layer 11 when the first cut direction 25 is set to be along the X-axis. Fig. 4 thus differs from Fig. 3 in that the first cut direction is along the X-axis which results in a different segmentation. The supporting lines 31, 32 are drawn as in Fig. 3. Borderlines 19, 20 are drawn from the same points as in Fig. 3. The borderline 19 which is drawn from where the first supporting line 31 intersects the first layer outer border 13 is set to be parallel to the Z-axis. The borderline 20 which is drawn from where the second supporting line 32 intersects the target shape 5 is set to be parallel to the X-axis.

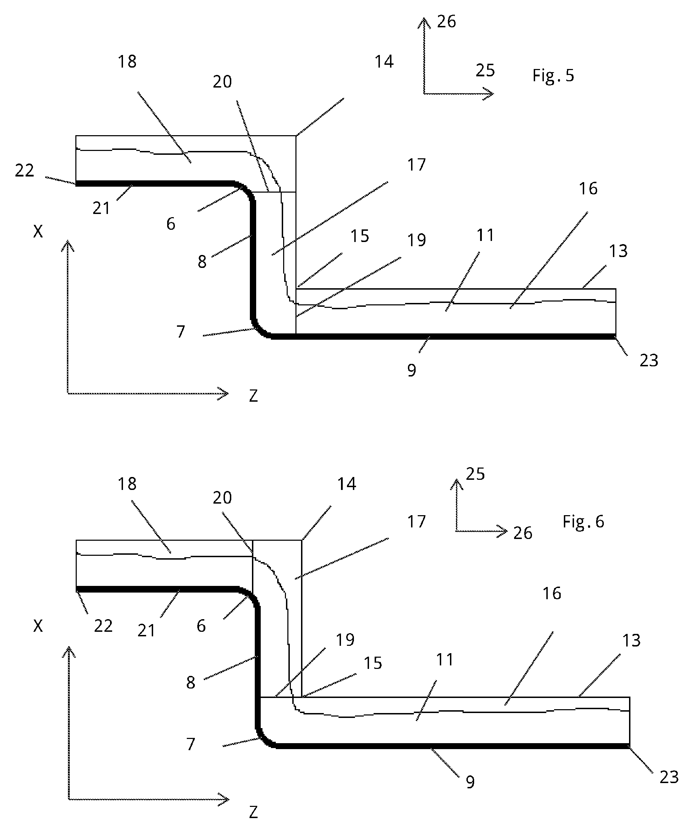

Fig. 5 differs from Fig. 3 only in that the thickness of the first layer 11 is not constant. Rather the offset distance is set as in Fig. 2. As in Fig. 2, the first layer outer border 13 comprises a sharp 90° convex corner 14 formed through extensions of portions of the first layer outer border 13 extending parallel to the X- and Z-axis, respectively. The borderlines 19, 20 are drawn as in Fig. 3, resulting in that the first layer 11 is divided into three segments 16, 17, 18.

Fig. 6 differs from Fig. 5 in that the first cut direction 25 is along the X-axis, resulting in borderlines 19, 20 drawn in a way corresponding to the borderlines in Fig. 4.

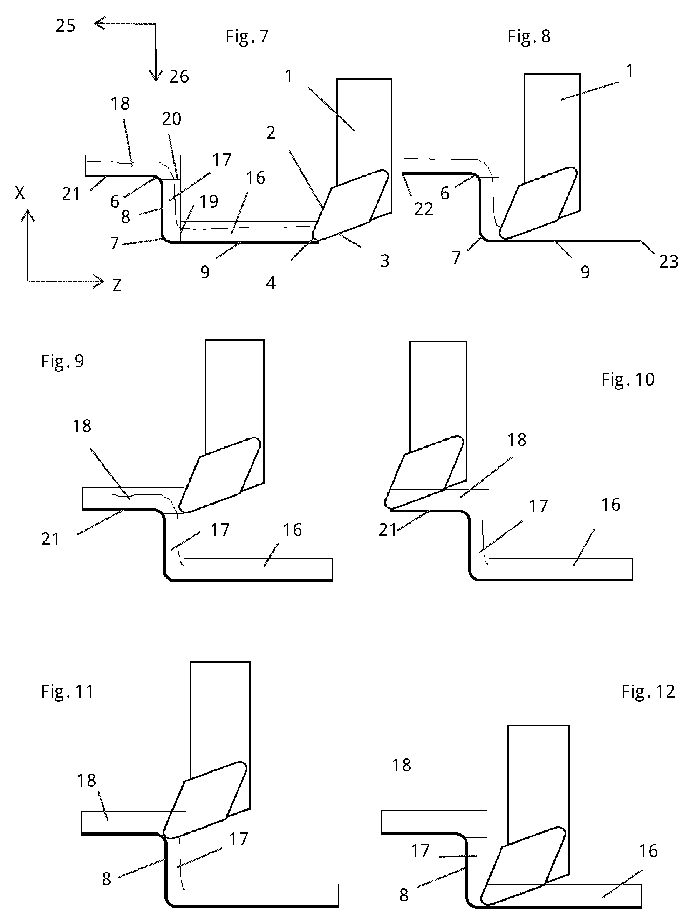

Figs. 7-12 show a first machining sequence where stock within the first layer 11 in Fig. 5 is removed by means of the turning tool 1 in Fig. 1. The first cut direction 25 is set along the Z-axis, and the second cut direction 26 is set along the X-axis. Therefore, the longitudinal segments 16, 18 (more precisely, the stock within each of the longitudinal segments 16, 18) are removed prior to the radial segment 17. The first cut direction 25 is set towards the left hand side. Therefore, the longitudinal segments 16, 18 are removed by moving the turning tool 1 towards the left hand side. Fig. 7 show a starting position of the turning tool when removing the first segment 16, and Fig. 8 show the end position. A first pass is thus illustrated by Figs. 7 and 8, where the turning tool 1 is moved towards the left-hand side during the first pass.

Figs. 9 and 10 show start and end positions, respectively, for the turning tool 1 in a second pass. Again, the turning tool 1 is moved towards the left-hand side.

Figs. 11 and 12 show start and end positions, reactively for the turning tool 1 in a third and final pass. The turning tool 1 is moved downwards, because the second cut direction 26 is downwards, i.e., towards a rotational axis (not shown) of the blank.

When the longitudinal segments 16, 18 are removed, the first cutting edge 2 is active, while the second cutting edge 3 is active when removing the radial segment 17. Therefore, the wear is distributed over a longer part of the cutting edge. When the turning tool 1 is moved towards the end position in Fig. 12, the cutting depth is relatively low. In other words, the part of the second cutting edge 3 which is active, i.e., in cut, is relatively low. This is thanks to the fact that segment 16 has been removed prior to the third pass. Therefore, the risk for insert breakage can be reduced.

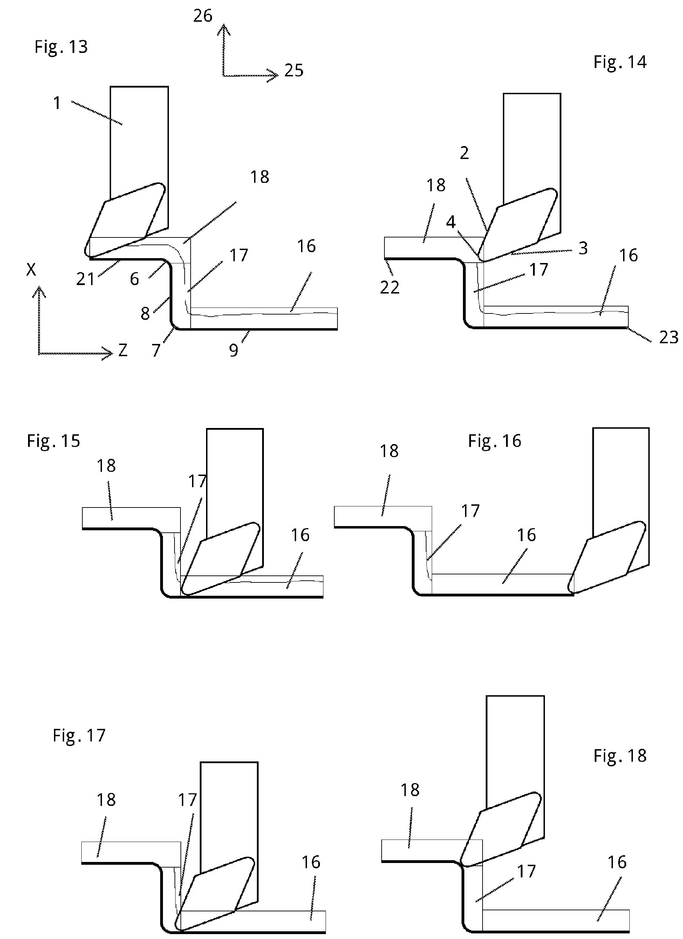

Figs. 13 - 18 show a second machining sequence where the first layer is removed through three passes. The segmentation of the first layer is the same as for the first machining sequence, because the first cut direction 25 is along the Z-axis and the second cut direction 26 is along the X-axis. As for the first machining sequence, the longitudinal segments 16, 18 are removed prior to the radial segment 17. Since the first cut direction 25 is towards the right-hand side, each of the longitudinal segments 16, 18 are removed by moving the turning tool 1 towards the right-hand side. In a first pass, one longitudinal segment 18 is removed as seen in Figs. 13 and 14, where start and end positions for the turning tool 1 is shown. The second pass is shown in Figs. 15 and 16 where the other longitudinal segment 16 is removed. In a third and final pass, shown in Figs. 17 and 18, the radial segment 17 is removed. The turning tool 1 is moved upwards, because the second cut direction 26 is upwards, i.e., away from the rotational axis (not shown) of the blank. When the turning tool 1 is moved towards the start position in the third pass, shown in Fig. 17, a long active second cutting edge 3 is avoided, thereby reducing the risk of insert breakage. The second cutting edge 3 is active during the first and second passes, see Figs. 13 - 16, while the first cutting edge 2 is active during the third pass, see Figs. 17 and 18. Further, the active part of the nose cutting edge 4 is to a great degree not overlapping for the third pass compared to the first and second passes, thereby increasing the tool life. The entering angle is acute during at least the most of the first, second and third passes, which the inventors have found to further reduce insert wear.

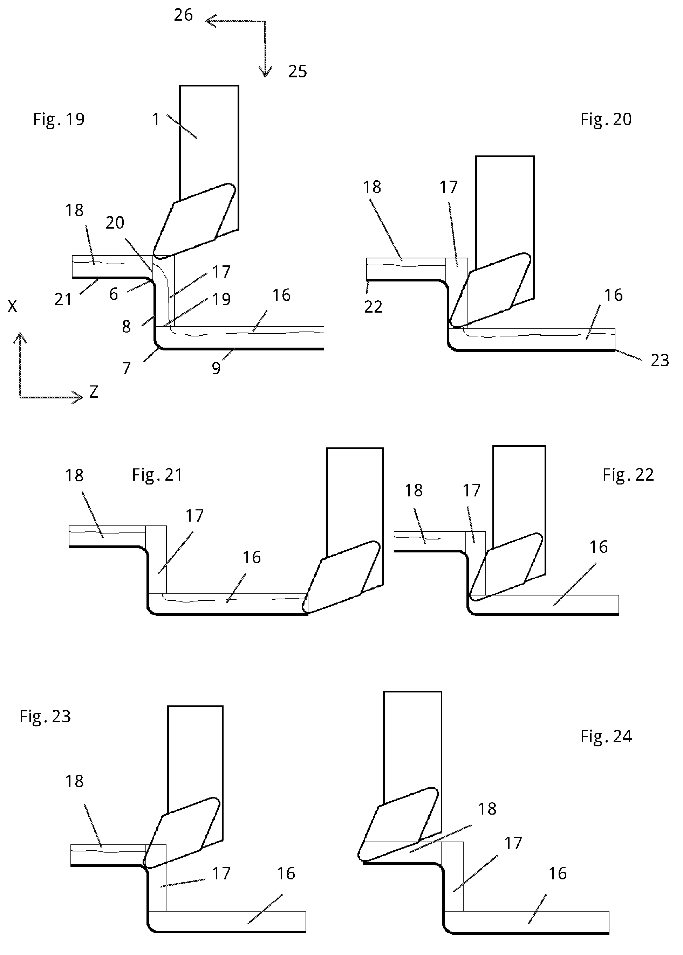

Figs. 19-24 show a third machining sequence where stock within the first layer 11 in Fig. 6 is removed by means of the turning tool 1 in Fig. 1. The first cut direction 25 is set along the X-axis, and the second cut direction 26 is set along the Z-axis. Since the first cut direction 25 is set to be along the X-axis, the radial segment 17 is removed first. Since the first cut direction 25 is downwards, i.e., towards the rotational axis (not shown), the turning tool 1 moves downwards during the first pass, as seen in Figs. 19 and 20. Thereafter, the longitudinal segments 16, 18 are removed through second and third passes which are shown in Figs. 21-24. Towards the end of the second pass, near the end position which is shown in Fig. 22, the cutting depth can be kept relatively lower compared to if the radial segment 17 had not been removed prior to the second pass. The second cutting edge is active, i.e., in cut during the first pass, while the first cutting edge is active during the second and third passes. Thereby, wear is distributed over a longer part of the cutting edge, which is a benefit with regards to tool life.

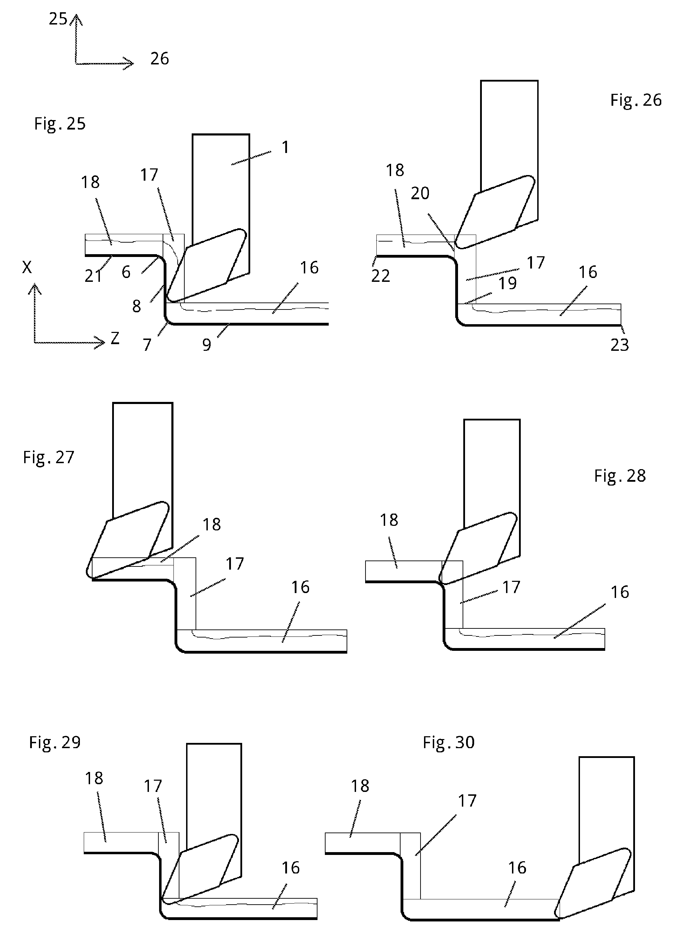

Figs. 25-30 show a fourth machining sequence where stock within the first layer 11 in Fig. 6 is removed by means of the turning tool 1 in Fig. 1. The first cut direction 25 is set along the X-axis, and the second cut direction 26 is set along the Z-axis. Since the first cut direction 25 is set to be along the X-axis, the radial segment 17 is removed first. Since the first cut direction 25 is upwards, i.e., away from the rotational axis (not shown), the turning tool 1 moves upwards during the first pass, as seen in Figs. 25 and 26. Thereafter, the longitudinal segments 16, 18 are removed through second and third passes which are shown in Figs. 27 - 30. The first cutting edge is active, i.e., in cut during the first pass, while the second cutting edge is active during the second and third passes. Thereby, wear is distributed over a longer part of the cutting edge, and to a great degree not overlapping with regards to the nose cutting edge, which is a benefit with regards to tool life. The entering angle is acute during at least the most of the first, second and third passes, which the inventors have found to further reduce insert wear.

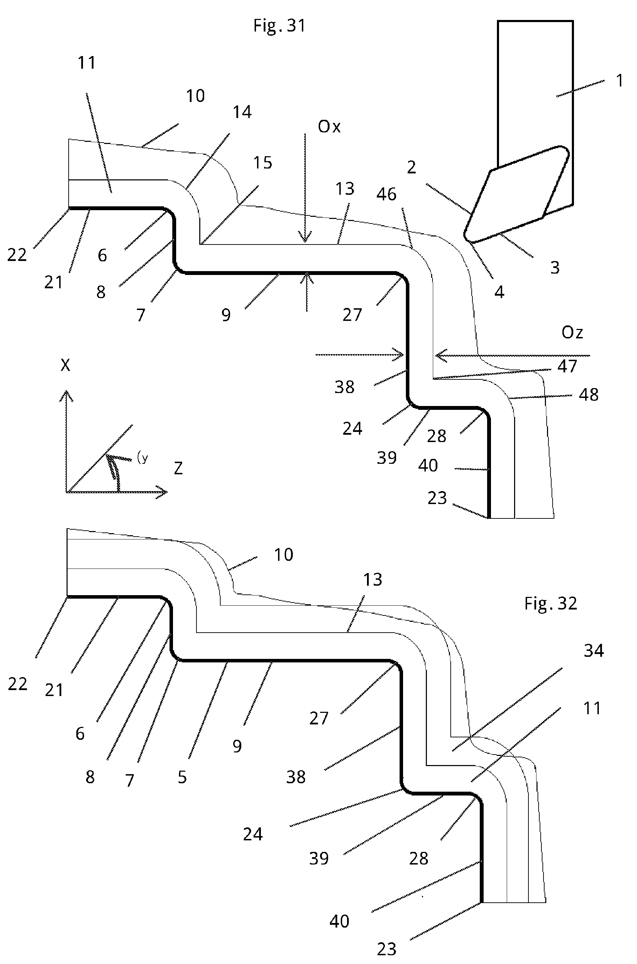

Reference is now made to Fig. 31 showing a turning tool 1, having the same properties as the turning tool in Fig. 1, and a blank having a blank shape 10 which differs to Fig. 1. The target shape 5 also differs from Fig. 1. The target shape 5 extends continuously between first and second target end points 22, 23, and is formed by a plurality of portions 6, 7, 8, 9, 21. The target shape 5 comprises three longitudinal portions 9, 21, 39 parallel to the Z-axis, three radial portions 8, 38, 40 parallel to the X-axis, three arc-shaped convex portions 6, 27, 28 and two arc-shaped concave portions 7, 24. A first layer 11 is generated, extending between the target shape 5 and a first layer outer border 13. The first layer outer border 13 is spaced apart from the target shape 5. The first layer 11 is generated in a corresponding way as in Fig. 1, which means that the offset distance is a constant value. The offset distance in the X-direction Ox is equal to the offset distance in the Z-direction Oz, and the thickness of the first layer 11 is uniform. The split angle α is set to 45°. The first layer outer border 13 comprises three convex portions 14, 46, 47 corresponding to the convex portions 6, 27, 28 of the target shape 5, and one two concave portion 15, 47 in the form of a sharp inner corners. The first layer 11 is completely within the stock.

Since there is stock outside of the first layer 11, a second layer 34 is generated, which is shown in Fig. 32. The inner border of the second layer is equivalent to the first layer outer border of 13. The second layer 34 is generated in the same way as the first layer 11. The outer border of the second layer 34 relates to the first layer outer border 13 in the same way as the first layer outer border 13 relates to the target shape 5. The second layer outer border is spaced apart from the first layer outer border 13 by a constant value, which means that a perpendicular distance from first layer outer border 13 to the second layer outer border 13 is a constant value which is the same value or offset distance as for the first layer outer border 13. The first and second layers 11, 34 thus have the same thickness. The second layer 34 is partly within the stock. The blank shape 10 partly extend outside the second layer outer border.

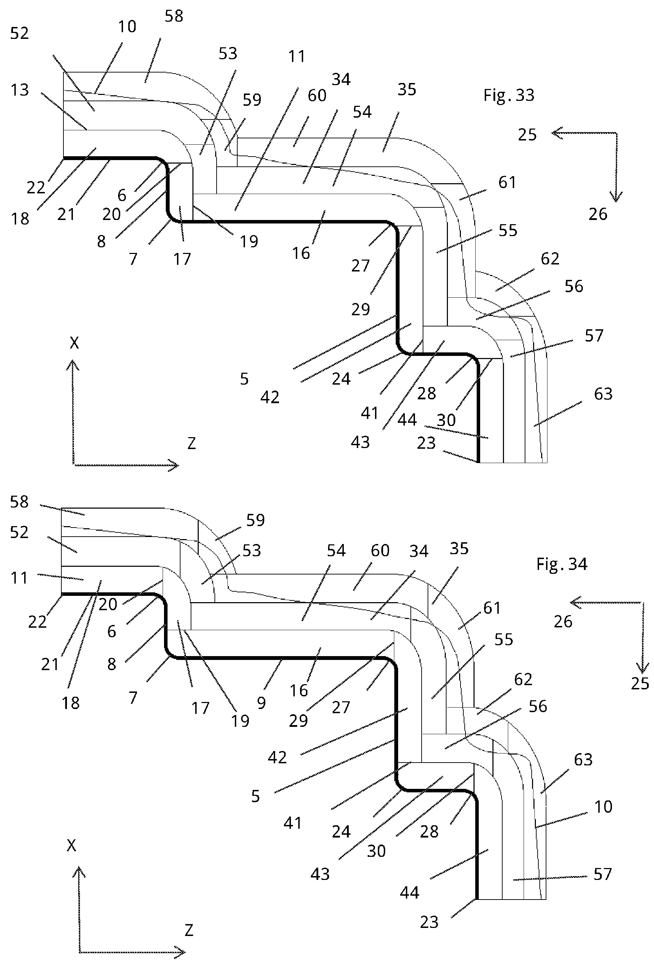

A third layer 35 is generated which is shown in Fig. 33. The outer border of the third layer 35 is completely outside the blank shape 10. Thus, no further layers are generated. The third layer 35 is generated in the same way as the first and second layers 11, 34. Thereafter, each of the layers 11, 34, 35 are divided into segments. Borderlines 19, 20, 29, 30, 41 for the first layer are arranged in accordance with the procedure in Fig. 3. Since the first cut direction 25 is along the Z-axis, each borderline 20, 29, 30 intersecting each of the convex portions 6, 27, 28 of the target shape 5 are arranged parallel to the Z-axis. Each borderline 19, 41 intersecting a concave portion of the first layer outer border 13 parallel to the X-axis. Borderlines within the second and third layers 34, 35 are generated in a corresponding manner. The number of segments is equal for each of the layers 11, 34, 35. From the segment 18 adjacent to the first target end point 22, every second segment is a longitudinal segment 18, 11, 43, and every second segment is a radial segment 17, 42, 44. From the same end of the second and third layers 34, 35, respectively, there is a corresponding alternation between longitudinal and radial segments. The outer layer which is the third layer 35 is removed first, by removing all segments of the third layer which comprises stock, i.e., which are intersected by the blank shape 10. In Fig. 33, this includes all segments except one longitudinal segment 62. Since the first cut direction 25 is along the Z-axis, all longitudinal segments 58, 60 of the third layer 35 which comprises stock are removed first, thereafter all radial segments 59, 61, 63 of the third layer 35. Since the first cut direction 25 is towards the left-hand side, each of the longitudinal segments 58, 60 are removed by moving the turning tool (not shown) towards the left-hand side. Preferably, segment 60 is removed prior to the segment 58 to reduce air-time. The radial segments 59, 61, 63 are thereafter removed by moving the turning tool (not shown) downwards, i.e., in the second cut direction 26 for each segment. Preferably the order of removal is segment 59 first, thereafter segment 61 and segment 63 last. Thereafter all segments which comprises stock of the second layer 34 are removed in a corresponding manner. The order of removal is preferably as follows: segment 56, segment 54, segment 52, segment 53, segment 55 and segment 57. Thereafter all segments which comprises stock of the first layer 11 are removed in a corresponding manner. The order of removal is preferably as follows: segment 43, segment 16, segment 18, segment 17, segment 42 and segment 44.

Fig. 34 shows how the same target shape 5 can be generated from the same blank shape 10 having the same layers 11, 34, 35 as in Fig. 33, but where the first and second cutting directions 25, 26 are set in a different way. In Fig. 34, the first cut direction 25 is along the X-axis, downwards, i.e., towards the rotational axis (not shown). The second cut direction 26 is along the Z-axis, towards the left-hand side. Because the first cut direction 25 is along the X-axis, borderlines 19, 20, 29, 30, 41 are arrange in the same manner as in Fig. 4, for all layers 11, 34, 35. All segments comprises stock, and the order of removal is preferably as follows: segment 59, segment 61, segment 63, segment 62, segment 60, segment 58, segment 53, segment 55, segment 57, segment 56, segment 54, segment 52, segment 17, segment 42, segment 44, segment 43, segment 16 and segment 18. The turning tool (not shown) in the method described in Figs. 33 and 34 corresponds to the turning tool in Fig. 31.

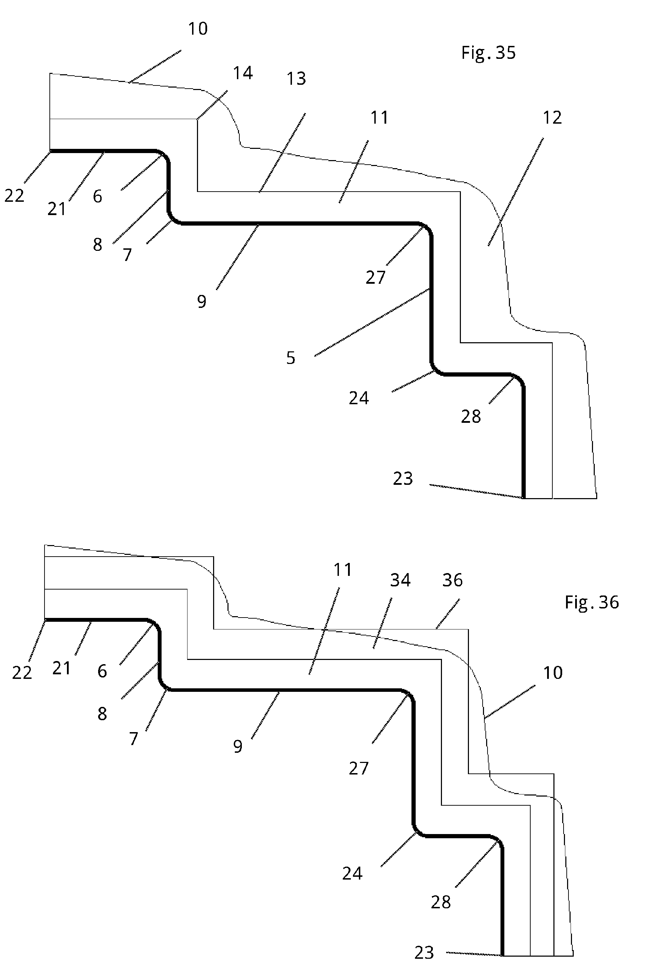

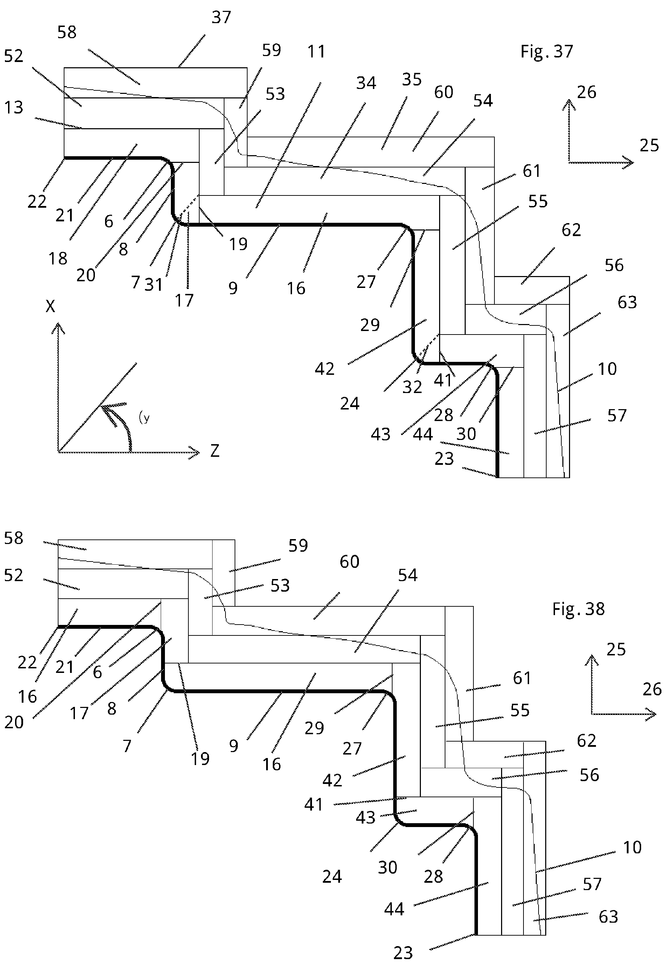

Figs. 35 - 38 shows how the same target shape 5 as in Figs. 31 -34 can be generated from the same blank shape 10, where layers 11, 34, 35 are generated in a different manner. The difference compared to Figs. 31 -34 is that the first layer outer border 13 comprises sharp convex corners 14 associated with the concave portions 6, 27, 28 of the target shape 5. Said corners 14 are generated in the same way as described for Figs. 5 and 6. Each further layer 34, 35 is generated in a corresponding manner, as shown in Figs. 36 - 38. In Fig. 37, the first cut direction is along the Z-axis. Therefore, borderlines 19, 20, 30, 41 are generated in the same way as in Fig. 5. Borderlines for the second and third layers 34, 35 are generated in the same way as for the first layer 11. The second cut direction 26 is along the X-axis, upwards i.e., in a direction away from the rotational axis (not shown) of the blank. All segments except one longitudinal segment 62 comprises stock. The segments are removed in the same order as in Fig. 33. All longitudinal segments 58, 60, 52, 54, 56, 18, 16, 43 are removed by moving the turning tool towards the right-hand side. All radial segments 63, 61, 59, 57, 55, 52, 44, 42, 17 are removed by moving the turning tool upwards.

In Fig. 38, the first cut direction is along the X-axis. Therefore, borderlines 19, 20, 30, 41 are generated in the same way as in Fig. 6. Borderlines for the second and third layers 34, 35 are generated in the same way as for the first layer 11. The segments are removed in the same order as in Fig. 33.

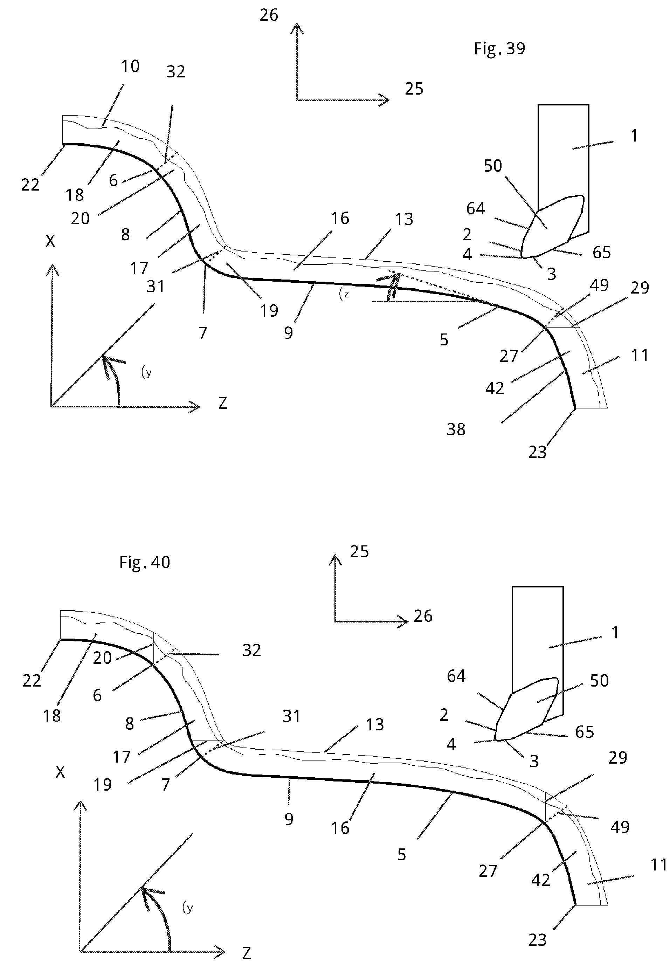

Fig. 39 show a target shape 5 and a blank shape 10 having a shape which differs from what has previously been described. A first layer 11 partly within the stock is generated such that the first layer outer border 13 is spaced apart from the target shape 5 by a constant offset distance. Said distance is measured perpendicularly from the target shape 5 to the first layer outer border 13. The split angle $\alpha$ is set to 45°. Supporting lines 31, 32, 49, connecting the target shape 5 and the first layer outer border 13, are arranged such that each of said borderlines 31, 32, 49 form an angle relative to the Z-axis which is equal to the split angle $\alpha$. Each of two supporting lines 32, 49 intersect a respective convex portion 6, 27 of the target shape. One supporting line 31 intersects a convex portion 7 of the target shape. Since the first cut direction 25 is along the Z-axis, borderlines 20, 29 which intersect convex portions 6, 27 are arranged parallel to the Z-axis. Each of said borderline 20, 29 intersect a respective supporting line 32, 49 at the target shape 5. One borderline 19 is arranged parallel to the X-axis and intersects one supporting line 31 at the first layer outer border 13. The borderlines 19, 20, 29 separates alternating longitudinal and radial segments 18, 16; 17, The angle $\beta$ which the target shape 5 forms relative to the Z-axis is less than or equal to 45° for all the longitudinal segments 16, 18. The target shape 5 in this case means specifically the inner border of the respective longitudinal segment 16, 18.

The turning tool 1 differs from the previously described turning tools in that the first and second cutting edges 2, 3 are relatively shorter, and in that the tuning insert 50 comprises third and fourth cutting edges 64, 65 spaced apart from the nose cutting edge 4 by a distance less than the offset distance. The third and fourth cutting edges 64, 65 forms an angle of 60° or less. The segments are removed such that the order of removal is longitudinal segments 18 and 16, followed by radial segments 42 and 17. During the removal of each of the longitudinal segments 18, 16 the turning tool 1 is moving towards the right-hand side. The turning tool 1 moves upwards when removing the radial segments 42, 17.

Fig. 40 differs from Fig. 39 in that the first and second cutting directions are exchanged. Therefore, the borderlines 19, 20, 29 are arranged in a different manner. Borderlines 20, 29 intersects the target shape 5 at the same points as in Fig. 39 but are arranged parallel to the X-axis. Borderline 19 intersects the first layer outer border 13 at the same point as in Fig. 39 but is arranged parallel to the Z-axis. The radial segments 42, 17 are removed prior to the longitudinal segments 18, 16. The direction which the turning tool 1 moves during removal of the segments 42, 17, 18, 16 is the same as in Fig. 39.

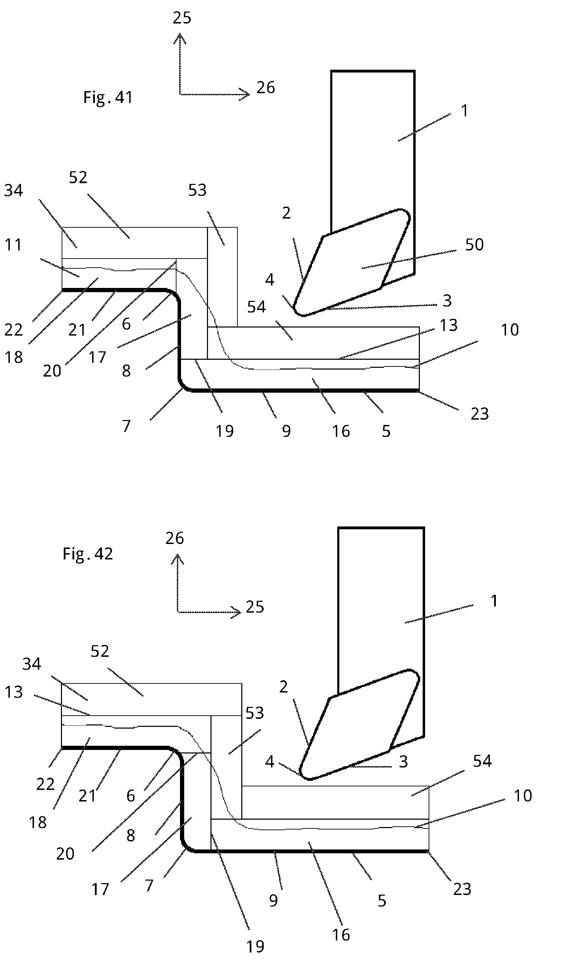

Fig. 41 shows a further example, where the target shape 5 and turning tool 1 are identical to Fig. 1 but where the blank shape 10 is different. A first layer 11 is generated and segmented as in Fig. 6, because the first cut direction 25 is along the same axis, i.e., the X-axis. The blank shape 10 extends beyond the first layer outer border 13. A second layer 34 is generated and segmented in a corresponding manner as the first layer 11. The segments of the second layer 34 are removed such that first the radial segment 53 is removed first by moving the turning tool 1 in a direction away from the rotational axis (not shown). Secondly, the longitudinal segment 54 is removed by moving the turning tool 1 towards the right hand side. Each of the above passes ends when there is no stock left in the respective cut direction 25, 26. Due to the radius of curvature of the nose cutting edge 4, there may be minute remaining stock within each of said segments 53, 54. However, such remaining stock will be removed during the removal of the segments 16, 17, 18 of the following layer, i.e., the first layer 11. After the second layer 34, the segments 17, 18, 16 of the first layer 11 is removed in accordance with the order and directions in Fig. 6.

Fig. 42 show the blank shape 10 as in Fig. 41 but where the first and second cut directions 25, 26 are exchanged. First and second layers 11, 34 are generated as in Fig. 41. Only one segment 53 in the second layer 34 comprises stock. Said segment 53 is removed by moving the turning tool in a direction upwards, i.e., in the second cut direction 26. Thereafter, the segments 18, 16, 17 of the first layer 11 are removed in accordance with Fig. 5.

**Claims**

1. A computer-implemented method for generating a tool path cycle for removing stock (12) from a blank by means of a turning tool (1), the turning tool (1) comprising first and second cutting edges (2, 3) connected by a convex nose cutting edge (4), such that a predefined target shape (5) is formed, the blank being rotatable around a rotational axis represented by a Z-axis, wherein an X-axis is perpendicular to the Z-axis and representing a radial direction,

   the target shape (5) comprising a plurality of portions (6, 7, 8, 9, 21, 24, 27, 28, 38, 39, 40), the plurality of portions (6, 7, 8, 9, 21, 24, 27, 28, 38, 39, 40) comprising one or more convex portions (6, 27, 28) and one or more concave portions (7, 24),
   at least one radial portion (8, 38, 40) extending to a larger degree along the X-axis than along the Z-axis,
   at least one longitudinal portion (9, 21, 39) extending to a larger degree along the Z-axis than along the X-axis,
   wherein one or more of said concave portions (7, 24) of the target shape (5) comprises an arc-shaped portion (7) having a radius of curvature thereof equal to or greater than a radius of curvature of the nose cutting edge (4), said at least one arc-shaped portion (7) connecting one radial portion (8) and one longitudinal portion (9), comprising the steps of:

      receiving an input of a blank shape (10),
      receiving an input of the target shape (5)
      setting of an offset distance (m),
      receiving an input of properties of the turning tool (1),
      setting a first cut direction (25) and a second cut direction (26),
      wherein one of said first and second cut directions (25, 26) represents direction of movement of the turning tool (1) along the X-axis and one represents direction of movement of the turning tool (1) along the Z-axis,
      generating a first layer (11) completely or partially within the stock (12),
      wherein the first layer (11) is bordered by the target shape (5) and a first layer outer border (13),
      wherein the first layer outer border (13) is spaced apart from the target shape (5) by the offset distance (m),
      wherein the first layer outer border (13) comprises one or more convex portions (14, 46, 48) and one or more concave portions (15, 47),
      **characterized in that**
      the method comprises the further steps of arranging border lines (19, 20, 29, 30, 41) parallel to the Z-axis and/or parallel to the X-axis,
      such that each of said border lines (19, 20, 29, 30, 41) extends between the target shape (5) and the first layer outer border (13) and intersects either a concave portion (15, 47) of the first layer outer border (13) or a convex portion (6, 27, 28) of the target shape (5), thus, dividing the first layer (11) into segments (16, 17, 18, 42, 43, 44) separated by the border lines (19, 20, 29, 30, 41),

such that adjacent to each longitudinal portion (9, 21, 39) is one longitudinal segment (16, 18, 43),

such that adjacent to each radial portion (8, 38, 40) is one radial segment (17, 42, 44), wherein one border line (19) is arranged such that said border line (19) intersects one of the concave portions (15) of the first layer outer border (13), thereby separating a radial segment (17) and a longitudinal segment (16) such that said at least one arc-shaped portion borders to only one of said radial and longitudinal segments (17, 16), generating a tool path such that each of said segments (16, 17, 18, 42, 43, 44) which border to said at least one arc-shaped portion of a concave portion of the target shape (5) is machined after the segment adjacent to said one segment, such that the turning tool (1) is moved in one direction along the Z-axis when machining the longitudinal segment or segments (16, 18, 43), and such that the turning tool (1) is moved in one direction along the X-axis when machining the radial segment or segments (17, 42, 44), wherein said directions along the X-axis and the Z-axis are either both towards or both away from said one or more concave portions (7, 24) of the target shape (5), if the first cut direction (25) is along the Z-axis, arranging one border line (20, 29, 30) intersecting the at least one convex portion (6, 27, 28) of the target shape (5) parallel to the Z-axis,

and arranging one borderline (19, 41) intersecting the at least one concave portion (15, 47) of the first layer outer border (13) parallel to the X-axis,

if the first cut direction (25) is along the X-axis, arranging one border line (20, 29, 30) intersecting the at least one convex portion (6, 27, 28) of the target shape (5) parallel to the X-axis, and arranging one borderline (19, 41) intersecting the at least one concave portion (15, 47) of the first layer outer border (13) parallel to the Z-axis,

if the first cut direction (25) is along the Z-axis, machining the longitudinal segment or segments (16, 18, 43), followed by machining the radial segment or segments (17, 42, 44),

if the first cut direction (25) is along the X-axis, machining the radial segment or segments (17, 42, 44), followed by machining the longitudinal segment or segments (16, 18, 43).

2. The method according to claim 1,

wherein if the first cut direction (25) is along the Z-axis, machining the longitudinal segment or segments (16, 18, 43) by moving the turning tool (1) in one direction along the Z-axis, followed by machining the radial segment or segments (17, 42, 44) by moving the turning tool (1) in one direction along the X-axis,

if the first cut direction (25) is along the X-axis, machining the radial segment or segments (17, 42, 44) by moving the turning tool (1) in one direction along the X-axis, followed by machining the longitudinal segment or segments (16, 18, 43) by moving the turning tool (1) in one direction along the Z-axis.

3. The method according to any one of the preceding claims,

wherein the radial portion (8, 38, 40) is parallel to the X-axis and the longitudinal portion (9, 21, 39) is parallel to the Z-axis, wherein one of the radial and the longitudinal portions (8, 38, 40; 9, 21, 39) is formed by a single pass.

4. The method according to any one of the preceding claims,

wherein the target shape (5) comprises a further longitudinal portion (21), wherein the further longitudinal portion (21) and the radial portion (8) are connected by the convex portion (6) of the target shape (5) in the form of an arc-shaped portion (6), wherein a third segment (18) is bordered by the further longitudinal portion (21).

5. The method according to any one of the preceding claims, comprising the further steps of receiving input of one parameter or two parameters Ox, Oz representing an offset distance in the X-direction, Ox, and an offset distance in the Z-direction, Oz.

6. The method according to claim 5,

wherein the convex portion (6) connects the radial portion (8), parallel to the X-axis, and a further longitudinal portion (21), parallel to the Z-axis,

wherein a radial portion of the first layer outer border (13) is parallel to the radial portion (8) and spaced apart by the offset distance in the Z-direction, Oz,

wherein a longitudinal portion of the first layer outer border (13) is parallel to the further longitudinal portion (21) and spaced apart by the offset distance in the X-direction, Ox,

wherein the radial and longitudinal portions of the first layer outer border (13) intersect in a convex portion (14) of the first layer outer border (13), said convex portion (14) being in the form of a 90° corner.

7. The method according to any one of the preceding claims, comprising the further steps of

setting a split angle $\alpha$,
arranging the border lines (20, 29, 30) intersecting convex portions (6, 27, 28) from points of said convex portions (6, 27, 28) having a normal thereof which form an angle relative to the Z-axis equal to the split angle $\alpha$.

8. The method according to claim 7,

comprising the further steps of
setting the split angle $\alpha$ to be equal to arctan $Ox$ / $Oz$.

9. The method according to any one of claims 5 to 8,

comprising the further steps of from said parameters representing the offset distances in the X- and Z-directions, $Ox$, $Oz$, calculating the offset distance (m),
and arranging the first layer outer border (13) perpendicularly spaced apart from the target shape (5) by the offset distance (m),
wherein the offset distance (m) is calculated according to the formula

$$m = ((90-\beta) \cdot Ox + \beta \cdot Oz)/90$$

where the angle $\beta$ is the angle which the target shape (5) forms relative to the Z-axis.

10. The method according to any one of claims 7 or 8 or according to claim 9 when dependent on claims 7 or 8,
comprising the further steps of:

generating perpendicular supporting lines (31, 32, 49) from points of each concave portions (7, 24) of the target shape (5) which form a normal thereof at an angle relative to the Z-axis equal to the split angle a,
arranging the border line or lines (20, 29, 30) which intersect convex portions (6, 27, 28) of the target shape (5) such that said border lines (20, 29, 30) intersect said points, and
arranging the border line or lines (19, 41) which intersect concave portions (7, 24) of the first layer outer border (13) such that each of said border lines (19, 41) intersect an intersection of one supporting line (31, 32, 49) and the first layer outer border (13).

11. The method according to any one of the preceding claims, comprising the further steps of
immediately after or substantially immediately after machining all stock (12) within each segment (16, 17, 18, 42, 43, 44) at a feed rate, moving the turning tool (1) to the subsequent segment at a faster speed than said feed rate.

12. The method according to any one of the preceding claims, comprising the further steps of

arranging the turning tool (1) such that the first cutting edge (2) forms a constant angle relative to the Z-axis when machining all segments (16, 17, 18, 42, 43, 44),
wherein the turning tool (1) comprises a tool body and a turning insert (50),
wherein the tool body extends along a longitudinal axis (A1) thereof, extending between a front end and a rear end,
wherein the rear end is connected to a machine interface (51) of a CNC-lathe,
wherein the turning insert (50) is connected to the front end of the tool body,
wherein the longitudinal axis (A1) is arranged parallel to the X-axis.

13. The method according to any one of the preceding claims, comprising the further steps of:

setting the turning tool (1) prior to setting the first and second cut directions (25, 26), and
if a nose angle of the turning tool (1) is above 60° and each of the first and second cutting edges (2, 3) has a length thereof in a top view which exceeds the offset distance (m), setting the first and second cut directions (25, 26) towards the concave portion or portions (7, 24).

14. The method according to any one of the claims 1 to 12, comprising the further steps of:

setting the first and second cut directions (25, 26) prior to setting the turning tool (1), and
if one or both of the first and second cut directions (25, 26) has been set to be in a direction away from the concave portion or portions (7, 24), setting the turning tool (1) such that either a nose angle of the turning tool (1) forms an angle less than or equal to above 60° or such that the turning tool comprises third and fourth cutting edges (64, 65), forming an angle therebetween of 60° or less, where said third and fourth cutting edges (64, 65) are spaced apart from the nose cutting edge (4) by a distance less than the offset distance (m).

15. The method according to any one of the preceding claims, comprising the further steps of

if the blank shape (10) is at least partly outside the first layer outer border (13), generating one or more further layers (34, 35) further away from the target shape (5), until all layers (34, 35) generated is completely spaced apart from the stock (12),
wherein each further layer (34, 35) is limited by an inner border and an outer border (36, 37),
wherein for each further layer (34, 35), the respective outer border (36, 37) is spaced apart from the respective inner border by the offset distance (m),
dividing each further layer (34, 35) into a set of segments (52-57; 58-63) separated by border lines,
wherein each of said set of segments (52-57; 58-63) corresponds to the set of segments (16, 17, 18, 42, 43, 44) of the first layer (11), wherein each of said border lines corresponds to a border line (19, 20, 29, 30, 41) of the first layer (11), and instructing the turning tool (1) to machine all segments (58-63) which comprises stock (12) from the layer of highest order (35), followed by all segments (52-57) which comprises stock (12) from each subsequent layer (34), until the first layer (11) remains.

16. A computer program product having instructions which when executed by a computing device or system cause the computing device or system to perform the method according to any one of the preceding claims.


**Patentansprüche**

1. Computerimplementiertes Verfahren zum Erzeugen eines Werkzeugbahnzyklus zum Entfernen von Material (12) von einem Rohling mittels eines Drehwerkzeugs (1), wobei das Drehwerkzeug (1) eine erste und eine zweite Schneidkante (2, 3) aufweist, die durch eine konvexe Nasenschneidkante (4) verbunden sind, so dass eine vordefinierte Zielform (5) ausgebildet wird, wobei der Rohling um eine durch eine Z-Achse dargestellte Rotationsachse rotierbar ist, wobei eine X-Achse senkrecht zu der Z-Achse verläuft und eine radiale Richtung darstellt,

die Zielform (5) eine Vielzahl von Abschnitten (6, 7, 8, 9, 21, 24, 27, 28, 38, 39, 40) aufweist, wobei die Vielzahl von Abschnitten (6, 7, 8, 9, 21, 24, 27, 28, 38, 39, 40) einen oder mehrere konvexe Abschnitte (6, 27, 28) und einen oder mehrere konkave Abschnitte (7, 24) aufweist, wenigstens einen radialen Teil (8, 38, 40), der sich in einem größeren Ausmaß entlang der X-Achse als entlang der Z-Achse erstreckt, wenigstens ein Längsabschnitt (9, 21, 39), der sich in einem größeren Ausmaß entlang der Z-Achse als entlang der X-Achse erstreckt, wobei einer oder mehrere der konkaven Teile (7, 24) der Zielform (5) einen bogenförmigen Teil (7) mit einem Krümmungsradius aufweist, der gleich oder größer als ein Krümmungsradius der Nasenschneidkante (4) ist, wobei der wenigstens eine bogenförmige Teil (7) einen radialen Teil (8) und einen Längsabschnitt (9) verbindet, wobei das Verfahren die folgenden Schritte aufweist:

Empfangen einer Eingabe einer Rohlingsform (10),
Empfangen einer Eingabe der Zielform (5)
Einstellen eines Versatzabstandes (m),
Empfangen einer Eingabe von Eigenschaften des Drehwerkzeugs (1),
Einstellen einer ersten Schneidrichtung (25) und einer zweiten Schneidrichtung (26),
wobei eine der ersten und zweiten Schneidrichtungen (25, 26) die Bewegungsrichtung des Drehwerkzeugs (1) entlang der X-Achse und eine die Bewegungsrichtung des Drehwerkzeugs (1) entlang der Z-Achse darstellt,
Erzeugen einer ersten Schicht (11) ganz oder teilweise innerhalb des Materials (12), wobei die erste Schicht (11) durch die Zielform (5) und einen äußeren Rand (13) der ersten Schicht begrenzt ist,
wobei der äußere Rand (13) der ersten Schicht von der Zielform (5) um den Versatzabstand (m) beabstandet ist,
wobei der äußere Rand (13) der ersten Schicht einen oder mehrere konvexe Abschnitte (14, 46, 48) und einen oder mehrere konkave Abschnitte (15, 47) aufweist, **dadurch gekennzeichnet, dass**
das Verfahren die folgenden weiteren Schritte aufweist
Anordnen von Grenzlinien (19, 20, 29, 30, 41) parallel zur Z-Achse und/oder parallel zur X-Achse, so dass jede der Grenzlinien (19, 20, 29, 30, 41) sich zwischen der Zielform (5) und dem äußeren Rand (13) der ersten Schicht erstreckt und entweder einen konkaven Abschnitt (15, 47) des äußeren Randes (13) der ersten Schicht oder einen konvexen Abschnitt (6, 27, 28) der Zielform (5) schneidet,
wodurch die erste Schicht (11) in Segmente (16, 17, 18, 42, 43, 44) unterteilt wird, die durch die Grenzlinien (19, 20, 29, 30, 41) getrennt sind,

sodass an jeden Längsabschnitt (9, 21, 39) ein Längssegment (16, 18, 43) angrenzt,

sodass an jeden radialen Abschnitt (8, 38, 40) ein radialer Abschnitt (17, 42, 44) angrenzt,

wobei eine Grenzlinie (19) so angeordnet ist, dass die Grenzlinie (19) einen der konkaven Abschnitte (15) des äußeren Randes (13) der ersten Schicht schneidet, wodurch ein radiales Segment (17) und ein longitudinales Segment (16) so getrennt werden, dass der wenigstens eine bogenförmige Abschnitt an nur eines der radialen und longitudinalen Segmente (17, 16) angrenzt, Erzeugen einer solchen Bewegungsbahn, dass jedes der Segmente (16, 17, 18, 42, 43, 44), das an den wenigstens einen bogenförmigen Teil eines konkaven Teils der Zielform (5) angrenzt, nach dem Segment bearbeitet wird, das an das eine Segment angrenzt, so dass das Drehwerkzeug (1) bei der Bearbeitung des Längssegments oder der Längssegmente (16, 18, 43) in einer Richtung entlang der Z-Achse bewegt wird, und so dass das Drehwerkzeug (1) bei der Bearbeitung des radialen Segments oder der radialen Segmente (17, 42, 44) in einer Richtung entlang der X-Achse bewegt wird,

wobei die Richtungen entlang der X-Achse und der Z-Achse entweder beide in Richtung des einen oder der mehreren konkaven Abschnitte (7, 24) der Zielform (5) oder beide davon weg verlaufen, wenn die erste Schneidrichtung (25) entlang der Z-Achse verläuft, Anordnen einer Grenzlinie (20, 29, 30), die den wenigstens einen konvexen Teil (6, 27, 28) der Zielform (5) schneidet, parallel zur Z-Achse und Anordnen einer Grenzlinie (19, 41), die den wenigstens einen konkaven Teil (15, 47) des äußeren Randes (13) der ersten Schicht schneidet, parallel zur X-Achse,

wenn die erste Schneidrichtung (25) entlang der X-Achse verläuft, Anordnen einer Grenzlinie (20, 29, 30), die den wenigstens einen konvexen Teil (6, 27, 28) der Zielform (5) schneidet, parallel zur X-Achse und Anordnen einer Grenzlinie (19, 41), die den wenigstens einen konkaven Teil (15, 47) des äußeren Randes (13) der ersten Schicht schneidet, parallel zur Z-Achse,

wenn die erste Schneidrichtung (25) entlang der X-Achse verläuft, Bearbeitung des oder der Längssegmente (16, 18, 43), gefolgt von der Bearbeitung des oder der Radialsegmente (17, 42, 44), wenn die erste Schneidrichtung (25) entlang der X-Achse verläuft, Bearbeitung des radialen Segments oder der radialen Segmente (17, 42, 44), gefolgt von der Bearbeitung des Längssegments oder der Längssegmente (16, 18, 43).

2. Verfahren nach Anspruch 1,

wobei, wenn die erste Schneidrichtung (25) entlang der Z-Achse verläuft, das oder die Längssegmente (16, 18, 43) durch Bewegen des Drehwerkzeugs (1) in einer Richtung entlang der Z-Achse bearbeitet werden, gefolgt von der Bearbeitung des oder der Radialsegmente (17, 42, 44) durch Bewegen des Drehwerkzeugs (1) in einer Richtung entlang der X-Achse,

wobei, wenn die erste Schneidrichtung (25) entlang der Z-Achse verläuft, das oder die Längssegmente (16, 18, 43) durch Bewegen des Drehwerkzeugs (1) in eine Richtung entlang der Z-Achse bearbeitet werden, gefolgt von der Bearbeitung des oder der radialen Segmente (17, 42, 44) durch Bewegen des Drehwerkzeugs (1) in eine Richtung entlang der X-Achse.

3. Verfahren nach einem der vorhergehenden Ansprüche,

wobei der radiale Abschnitt (8, 38, 40) parallel zur X-Achse und der Längsabschnitt (9, 21, 39) parallel zur Z-Achse ist,

wobei einer der Radial- und Längsabschnitte (8, 38, 40; 9, 21, 39) durch einen einzigen Durchgang ausgebildet wird.

4. Verfahren nach einem der vorhergehenden Ansprüche,

wobei die Zielform (5) einen weiteren Längsabschnitt (21) aufweist,

wobei der weitere Längsabschnitt (21) und der Radialabschnitt (8) durch den konvexen Abschnitt (6) der Zielform (5) in Form eines bogenförmigen Abschnitts (6) verbunden werden,

wobei ein drittes Segment (18) durch den weiteren Längsabschnitt (21) begrenzt ist.

5. Verfahren nach einem der vorhergehenden Ansprüche,

das die folgenden weiteren Schritte aufweist Empfangen der Eingabe eines Parameters oder zweier Parameter $0x, 0z$, die einen Versatzabstand in der X-Richtung 0x und einen Versatzabstand in der Z-Richtung Oz darstellen.

35      **EP 4 198 660 B1**      36

**6.** Verfahren nach Anspruch 5,

> wobei der konvexe Abschnitt (6) den radialen Abschnitt (8) parallel zurX-Achse und einen weiteren Längsabschnitt (21) parallel zur Z-Achse verbindet,
> wobei ein radialer Abschnitt des äußeren Randes (13) der ersten Schicht parallel zu dem radialen Abschnitt (8) ist und um den Versatzabstand in der Z-Richtung Oz beabstandet ist,
> wobei ein Längsabschnitt des äußeren Randes (13) der ersten Schicht parallel zu dem weiteren Längsabschnitt (21) und um den Versatzabstand in X-Richtung Ox beabstandet ist,
> wobei sich die Radial- und Längsabschnitte des äußeren Randes (13) der ersten Schicht in einem konvexen Abschnitt (14) des äußeren Randes (13) der ersten Schicht ausbilden, wobei der konvexe Abschnitt (14) die Form einer 90°-Ecke aufweist.

**7.** Verfahren nach einem der vorangehenden Ansprüche,

> das die folgenden weiteren Schritte aufweist Einstellen eines Split-Winkels $\alpha$,
> Anordnen der Grenzlinien (20, 29, 30), die konvexe Abschnitte (6, 27, 28) schneiden, von Punkten der konvexen Abschnitte (6, 27, 28) aus, die eine Normale davon aufweisen, die einen Winkel relativ zur Z-Achse gleich dem Split-Winkel $\alpha$ aufweist.

**8.** Verfahren nach Anspruch 7,

> das die folgenden weiteren Schritte aufweist Einstellen des Split-Winkels $\alpha$ auf den Wert arctan Ox / Oz.

**9.** Verfahren nach einem der Ansprüche 5 bis 8,

> das die folgenden weiteren Schritte aufweist Berechnen des Versatzabstandes (m) aus den Parametern, die die Versatzabstände in den X- und Z-Richtungen Ox, Oz darstellen
> und Anordnen des äußeren Randes (13) der ersten Schicht senkrecht zur Zielform (5) um den Versatzabstand (m) beabstandet,
> wobei der Versatzabstand (m) nach der folgenden Formel berechnet wird

$$m = ((90-\beta)\, Ox + \beta\, Oz)/90$$

> wobei der Winkel $\beta$ der Winkel ist, den die Zielform (5) relativ zur Z-Achse ausbildet.

**10.** Verfahren nach einem der Ansprüche 7 oder 8 oder nach Anspruch 9 in Abhängigkeit von den Ansprüchen 7 oder 8,
das die folgenden weiteren Schritte aufweist:

> Erzeugen von senkrechten Stützlinien (31, 32, 49) von Punkten jedes konkaven Abschnitts (7, 24) der Zielform (5), die eine Normale davon in einem Winkel relativ zur Z-Achse ausbilden, der gleich dem Split-Winkel $\alpha$ ist,
> Anordnen der Grenzlinie oder -linien (20, 29, 30), die konvexe Abschnitte (6, 27, 28) der Zielform (5) schneiden, derart, dass die Grenzlinien (20, 29, 30) die genannten Punkte schneiden, und Anordnen der Grenzlinie oder-linien (19, 41), die konkave Abschnitte (7, 24) des äußeren Randes (13) der ersten Schicht schneiden, derart, dass jede der Grenzlinien (19, 41) einen Übergang von einer Stützlinie (31, 32, 49) und dem äußeren Rand (13) der ersten Schicht schneidet.

**11.** Verfahren nach einem der vorhergehenden Ansprüche,

> das die folgenden weiteren Schritte aufweist unmittelbar nach oder im wesentlichen unmittelbar nach der Bearbeitung des gesamten Materials (12) innerhalb jedes Segments (16, 17, 18, 42, 43, 44) mit einer Vorschubgeschwindigkeit,
> Bewegen des Drehwerkzeugs (1) zum nachfolgenden Segment mit einer Geschwindigkeit als die Vorschubgeschwindigkeit.

**12.** Verfahren nach einem der vorhergehenden Ansprüche,

> das die folgenden weiteren Schritte aufweist Anordnen des Drehwerkzeugs (1) derart, dass die erste Schneidkante (2) bei der Bearbeitung aller Segmente (16, 17, 18, 42, 43, 44) einen konstanten Winkel relativ zur Z-Achse ausbildet, wobei das Drehwerkzeug (1) einen Werkzeugkörper und einen Dreheinsatz (50) aufweist,
> wobei sich der Werkzeugkörper entlang einer Längsachse (A1) davon erstreckt, die sich zwischen einem vorderen Ende und einem hinteren Ende erstreckt,
> wobei das hintere Ende mit einer Maschinenschnittstelle (51) einer CNC-Drehmaschine verbunden ist,
> wobei der Dreheinsatz (50) mit dem vorderen Ende des Werkzeugkörpers verbunden ist,
> wobei die Längsachse (A1) parallel zur X-Achse angeordnet ist.

**13.** Verfahren nach einem der vorhergehenden Ansprüche,
das die folgenden weiteren Schritte aufweist:

Einstellen des Drehwerkzeugs (1) vor dem Einstellen der ersten und zweiten Schneidrichtung (25, 26), und

Einstellen der ersten und zweiten Schneidrichtung (25, 26) in Richtung des konkaven Abschnitts oder der konkaven Abschnitte (7, 24), wenn ein Nasenwinkel des Drehwerkzeugs (1) über 60° liegt und jede der ersten und zweiten Schneidkanten (2, 3) in der Draufsicht eine Länge aufweist, die den Versatzabstand (m) überschreitet.

14. Verfahren nach einem der Ansprüche 1 bis 12, das die folgenden weiteren Schritte aufweist:

Einstellen der ersten und zweiten Schneidrichtung (25, 26) vor dem Einstellen des Drehwerkzeugs (1), und

wenn eine oder beide der ersten und zweiten Schneidrichtungen (25, 26) so eingestellt worden sind, dass sie in einer Richtung weg von dem konkaven Abschnitt oder den konkaven Abschnitten (7, 24) liegen, Einstellen des Drehwerkzeugs (1) derart, dass entweder ein Nasenwinkel des Drehwerkzeugs (1) einen Winkel von weniger als oder gleich über 60° aufweist oder derart, dass das Drehwerkzeug eine dritte und vierte Schneidkante (64, 65) aufweist, die einen Winkel von 60° oder weniger dazwischen ausbilden, wobei die dritten und vierten Schneidkanten (64, 65) von der Nasenschneidkante (4) um einen Abstand beabstandet sind, der kleiner als der Versatzabstand (m) ist.

15. Verfahren nach einem der vorhergehenden Ansprüche,

das die folgenden weiteren Schritte aufweist wenn die Rohlingsform (10) wenigstens teilweise außerhalb des äußeren Randes (13) der ersten Schicht liegt, Erzeugen einer oder mehrerer weiterer Schichten (34, 35), die weiter von der Zielform (5) entfernt sind, bis alle erzeugten Schichten (34, 35) vollständig von dem Vorrat (12) beabstandet sind,

wobei jede weitere Schicht (34, 35) durch einen inneren Rand und einen äußeren Rand (36, 37) begrenzt ist,

wobei für jede weitere Schicht (34, 35) der jeweilige äußere Rand (36, 37) von dem jeweiligen inneren Rand um den Versatz (m) beabstandet ist,

Unterteilen jeder weiteren Schicht (34, 35) in einen Satz von Segmenten (52-57; 58-63), die durch Grenzlinien getrennt sind,

wobei jeder der Sätze von Segmenten (52-57; 58-63) dem Satz von Segmenten (16, 17, 18, 42, 43, 44) der ersten Schicht (11) entspricht,

wobei jede der Grenzlinien einer Grenzlinie (19, 20, 29, 30, 41) der ersten Schicht (11) entspricht, Anweisen des Drehwerkzeugs (1), alle Segmente (58-63) zu bearbeiten, die ein Material (12) von der Schicht höchster Ordnung (35) aufweisen, gefolgt von allen Segmenten (52-57), die ein Material (12) von jeder nachfolgenden Schicht (34) aufweisen, bis die erste Schicht (11) übrig bleibt.

16. Computerprogrammprodukt mit Anweisungen, die, wenn sie von einer Vorrichtung oder einem System ausgeführt werden, die Vorrichtung oder das System veranlassen, das Verfahren nach einem der vorhergehenden Ansprüche durchzuführen.

**Revendications**

1. Procédé mis en oeuvre par ordinateur destiné à générer un cycle de trajectoire d'outil pour enlever de la matière (12) d'une ébauche au moyen d'un outil de tournage (1), l'outil de tournage (1) comprenant des première et seconde arêtes de coupe (2, 3) reliées par une arête de coupe de bec convexe (4), de telle sorte qu'une forme cible prédéterminée (5) est formée, l'ébauche pouvant être entraînée en rotation autour d'un axe de rotation représenté par un axe Z, où un axe X est perpendiculaire à l'axe Z et représentant une direction radiale,

la forme cible (5) comprenant une pluralité de parties (6, 7, 8, 9, 21, 24, 27, 28, 38, 39, 40), la pluralité de parties (6, 7, 8, 9, 21, 24, 27, 28, 38, 39, 40) comprenant une ou plusieurs parties convexes (6, 27, 28) et une ou plusieurs parties concaves (7, 24),

au moins une partie radiale (8, 38, 40) s'étendant dans une plus grande mesure le long de l'axe X que le long de l'axe Z,

au moins une partie longitudinale (9, 21, 39) s'étendant dans une plus grande mesure le long de l'axe Z que le long de l'axe X,

où une ou plusieurs desdites parties concaves (7, 24) de la forme cible (5) comprennent une partie en forme d'arc (7) présentant un rayon de courbure supérieur ou égal à un rayon de courbure de l'arête de coupe de bec (4), ladite au moins une partie en forme d'arc (7) reliant une partie radiale (8) et une partie longitudinale (9), comprenant les étapes consistant à :

recevoir une entrée d'une forme d'ébauche (10),

recevoir une entrée de la forme cible (5),

régler une distance de décalage (m),

recevoir une entrée de propriétés de l'outil de tournage (1),

régler une première direction de coupe (25) et une seconde direction de coupe (26), où l'une desdites première et seconde directions de coupe (25, 26) représente une direction de déplacement de l'outil de tournage (1) le long de l'axe X et l'une représente une direction de déplacement de l'outil de tournage (1) le long de l'axe Z,

générer une première couche (11) complètement ou partiellement dans la matière (12),

où la première couche (11) est délimitée par la forme cible (5) et un bord extérieur de première couche (13),

où le bord extérieur de première couche (13) est espacé de la forme cible (5) de la distance de décalage (m),

où le bord extérieur de première couche (13) comprend une ou plusieurs parties convexes (14, 46, 48) et une ou plusieurs parties concaves (15, 47),

**caractérisé en ce que**

le procédé comprend les étapes supplémentaires consistant à

agencer des lignes de bord (19, 20, 29, 30, 41) parallèlement à l'axe Z et/ou parallèlement à l'axe X,

de telle sorte que chacune desdites lignes de bord (19, 20, 29, 30, 41) s'étend entre la forme cible (5) et le bord extérieur de première couche (13) et croise soit une partie concave (15, 47) du bord extérieur de première couche (13), soit une partie convexe (6, 27, 28) de la forme cible (5), divisant ainsi la première couche (11) en segments (16, 17, 18, 42, 43, 44) séparés par les lignes de bord (19, 20, 29, 30, 41),

de telle sorte que de manière adjacente à chaque partie longitudinale (9, 21, 39) se trouve un segment longitudinal (16, 18, 43),

de telle sorte que de manière adjacente à chaque partie radiale (8, 38, 40) se trouve un segment radial (17, 42, 44),

où une ligne de bord (19) est agencée de telle sorte que ladite ligne de bord (19) croise une des parties concaves (15) du bord extérieur de première couche (13), séparant ainsi un segment radial (17) et un segment longitudinal (16) de telle sorte que ladite au moins une partie en forme d'arc ne borde que l'un desdits segments radial et longitudinal (17, 16),

générer une trajectoire d'outil de telle sorte que chacun desdits segments (16, 17, 18, 42, 43, 44) lesquels bordent ladite au moins une partie en forme d'arc d'une partie concave de la forme cible (5) est usiné après le segment adjacent audit un segment, de telle sorte que l'outil de tournage (1) est déplacé dans une direction le long de l'axe Z lors de l'usinage du ou des segments longitudinaux (16, 18, 43), et de telle sorte que l'outil de tournage (1) est déplacé dans une direction le long de l'axe X lors de l'usinage du ou des segments radiaux (17, 42, 44),

où lesdites directions le long de l'axe X et de l'axe Z sont soit toutes les deux en direction, soit toutes les deux vers l'opposé desdites une ou plusieurs parties concaves (7, 24) de la forme cible (5),

si la première direction de coupe (25) est le long de l'axe Z, agencer une ligne de bord (20, 29, 30) croisant la au moins une partie convexe (6, 27, 28) de la forme cible (5) parallèlement à l'axe Z,

et agencer une ligne de bord (19, 41) croisant la au moins une partie concave (15, 47) du bord extérieur de première couche (13) parallèlement à l'axe X,

si la première direction de coupe (25) est le long de l'axe X, agencer une ligne de bord (20, 29, 30) croisant la au moins une partie convexe (6, 27, 28) de la forme cible (5) parallèlement à l'axe X, et agencer une ligne de bord (19, 41) croisant la au moins une partie concave (15, 47) du bord extérieur de première couche (13) parallèlement à l'axe Z,

si la première direction de coupe (25) est le long de l'axe Z, usiner le ou les segments longitudinaux (16, 18, 43), puis usiner le ou les segments radiaux (17, 42, 44),

si la première direction de coupe (25) est le long de l'axe X, usiner le ou les segments radiaux (17, 42, 44), puis usiner le ou les segments longitudinaux (16, 18, 43).

2. Procédé selon la revendication 1,

où si la première direction de coupe (25) est le long de l'axe Z, usiner le ou les segments longitudinaux (16, 18, 43) en déplaçant l'outil de tournage (1) dans une direction le long de l'axe Z, puis usiner le ou les segments radiaux (17, 42, 44) en déplaçant l'outil de tournage (1) dans une direction le long de l'axe X,

si la première direction de coupe (25) est le long de l'axe X, usiner le ou les segments radiaux (17, 42, 44) en déplaçant l'outil de tournage (1) dans une direction le long de l'axe X, puis usiner le ou les segments longitudinaux (16, 18, 43) en déplaçant l'outil de tournage (1) dans une direction le long de l'axe Z.

3. Procédé selon l'une quelconque des revendications précédentes,

où la partie radiale (8, 38, 40) est parallèle à l'axe X et la partie longitudinale (9, 21, 39) est parallèle à l'axe Z,

où l'une des parties radiale et longitudinale (8, 38, 40 ; 9, 21, 39) est formée au moyen d'une seule passe.

4. Procédé selon l'une quelconque des revendications précédentes,

où la forme cible (5) comprend une partie longitudinale supplémentaire (21),

où la partie longitudinale supplémentaire (21) et la partie radiale (8) sont reliées par la partie convexe (6) de la forme cible (5) sous la forme d'une partie en forme d'arc (6),

où un troisième segment (18) est bordé par la partie longitudinale supplémentaire (21).

5. Procédé selon l'une quelconque des revendications précédentes,

comprenant les étapes supplémentaires consistant à

recevoir une entrée d'un paramètre ou de deux paramètres *Ox*, *Oz* représentant une distance de décalage dans la direction X, *Ox*, et une distance de décalage dans la direction Z, *Oz*.

6. Procédé selon la revendication 5,

où la partie convexe (6) relie la partie radiale (8), parallèle à l'axe X, et une partie longitudinale supplémentaire (21), parallèle à l'axe Z,

où une partie radiale du bord extérieur de première couche (13) est parallèle à la partie radiale (8) et espacée de la distance de décalage dans la direction Z, *Oz,*

où une partie longitudinale du bord extérieur de première couche (13) est parallèle à la partie longitudinale supplémentaire (21) et espacée de la distance de décalage dans la direction X, *Ox,*

où les parties radiale et longitudinale du bord extérieur de première couche (13) se croisent dans une partie convexe (14) du bord extérieur de première couche (13), ladite partie convexe (14) étant sous la forme d'un coude à 90°.

7. Procédé selon l'une quelconque des revendications précédentes,

comprenant les étapes supplémentaires consistant à

régler un angle de division $\alpha$,

agencer les lignes de bord (20, 29, 30) croisant des parties convexes (6, 27, 28) à partir de points desdites parties convexes (6, 27, 28) au niveau desquels leur normale forme un angle par rapport à l'axe Z égal à l'angle de division $\alpha$.

8. Procédé selon la revendication 7,

comprenant les étapes supplémentaires consistant à

régler l'angle de division $\alpha$ de sorte à ce qu'il soit égal à arctan *Ox* / *Oz.*

9. Procédé selon l'une quelconque des revendications 5 à 8,

comprenant les étapes supplémentaires consistant à

à partir desdits paramètres représentant les distances de décalage dans les directions X et Z, *Ox, Oz,* calculer la distance de décalage (m), et agencer le bord extérieur de première couche (13) perpendiculairement espacé de la forme cible (5) de la distance de décalage (m),

où la distance de décalage (m) est calculée conformément à la formule

$$m = ((90\text{-}\beta) \cdot Ox + \beta \cdot Oz)/90$$

où l'angle $\beta$ est l'angle que forme la forme cible (5) par rapport à l'axe Z.

10. Procédé selon l'une quelconque des revendications 7 et 8 ou selon la revendication 9 lorsqu'elle dépend des revendications 7 ou 8, comprenant les étapes supplémentaires consistant à :

générer des lignes de support perpendiculaires (31, 32, 49) à partir de points de chaque partie concave (7, 24) de la forme cible (5) au niveau desquels leur normale forme un angle par rapport à l'axe Z égal à l'angle de division $\alpha$,

agencer la ou les lignes de bord (20, 29, 30) lesquelles croisent des parties convexes (6, 27, 28) de la forme cible (5) de telle sorte que lesdites lignes de bord (20, 29, 30) croisent lesdits points, et

agencer la ou les lignes de bord (19, 41) lesquelles croisent des parties concaves (7, 24) du bord extérieur de première couche (13) de telle sorte que chacune desdites lignes de bord (19, 41) croise une intersection d'une ligne de support (31, 32, 49) et du bord extérieur de première couche (13).

11. Procédé selon l'une quelconque des revendications précédentes,

comprenant les étapes supplémentaires consistant à

juste après ou quasiment juste après l'usinage de toute la matière (12) dans chaque segment (16, 17, 18, 42, 43, 44) à une vitesse d'avance donnée, déplacer l'outil de tournage (1) au prochain segment à une allure plus rapide que ladite vitesse d'avance.

12. Procédé selon l'une quelconque des revendications précédentes,

    comprenant les étapes supplémentaires consistant à

    agencer l'outil de tournage (1) de telle sorte que la première arête de coupe (2) forme un angle constant par rapport à l'axe Z lors de l'usinage de tous les segments (16, 17, 18, 42, 43, 44),
    où l'outil de tournage (1) comprend un corps d'outil et une plaquette de tournage (50),
    où le corps d'outil s'étend le long d'un axe longitudinal (A1) de celui-ci, s'étendant entre une extrémité avant et une extrémité arrière,
    où l'extrémité arrière est reliée à une interface machine (51) d'un tour à commande numérique par ordinateur,
    où la plaquette de tournage (50) est reliée à l'extrémité avant du corps d'outil,
    où l'axe longitudinal (A1) est agencé parallèlement à l'axe X.

13. Procédé selon l'une quelconque des revendications précédentes,
comprenant les étapes supplémentaires consistant à :

    régler l'outil de tournage (1) avant de régler les première et seconde directions de coupe (25, 26), et
    si un angle de bec de l'outil de tournage (1) est supérieur à 60° et que chacune des première et seconde arêtes de coupe (2, 3) présente une longueur selon une vue de dessus qui dépasse la distance de décalage (m), régler les première et seconde directions de coupe (25, 26) en direction de la ou des parties concaves (7, 24).

14. Procédé selon l'une quelconque des revendications 1 à 12,
comprenant les étapes supplémentaires consistant à :

    régler les première et seconde directions de coupe (25, 26) avant de régler l'outil de tournage (1), et
    si l'une ou les deux des première et seconde directions de coupe (25, 26) ont été réglées pour être dans une direction vers l'opposé de la ou des parties concaves (7, 24), régler l'outil de tournage (1) soit de telle sorte qu'un angle de bec de l'outil de tournage (1) forme un angle inférieur ou égal à 60°, soit de telle sorte que l'outil de tournage comprend des troisième et quatrième arêtes de coupe (64, 65), formant un angle entre elles de 60° ou moins, où lesdites troisième et quatrième arêtes de coupe (64, 65) sont espacées de l'arête de coupe de bec (4) d'une distance inférieure à la distance de décalage (m).

15. Procédé selon l'une quelconque des revendications précédentes,

    comprenant les étapes supplémentaires consistant à
    si la forme d'ébauche (10) est au moins en partie à l'extérieur du bord extérieur de première couche (13), générer une ou plusieurs couches supplémentaires (34, 35) encore plus éloignées de la forme cible (5), jusqu'à ce que toutes le couches (34, 35) générées soient complètement espacée de la matière (12),
    où pour chaque couche supplémentaire (34, 35), le bord extérieur respectif (36, 37) est espacé du bord intérieur respectif de la distance de décalage (m),
    diviser chaque couche supplémentaire (34, 35) en un ensemble de segments (52-57 ; 58-63) séparés par des lignes de bord,
    où chaque segment dudit ensemble de segments (52-57 ; 58-63) correspond à l'ensemble de segments (16, 17, 18, 42, 43, 44) de la première couche (11),
    où chacune desdites lignes de bord correspond à une ligne de bord (19, 20, 29, 30, 41) de la première couche (11),
    et donner pour instruction à l'outil de tournage (1) d'usiner tous les segments (58-63) lesquels comprennent la matière (12) de la couche de plus haut niveau (35), puis tous les segments (52-57) lesquels comprennent la matière (12) de chaque couche ultérieure (34), jusqu'à ce qu'il reste la première couche (11).

16. Produit de programme informatique présentant des instructions lesquelles lorsqu'elles sont exécutées par un dispositif ou un système informatique amènent le dispositif ou système informatique à réaliser le procédé selon l'une quelconque des revendications précédentes.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

Fig. 38

Fig. 39

Fig. 40

Fig. 41

Fig. 42

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3702853 A1

- US 5107414 A